(19) Europäisches Patentamt
European Patent Office
Office européen des brevets

(11) **EP 1 674 501 B1**

(12) **EUROPÄISCHE PATENTSCHRIFT**

(45) Veröffentlichungstag und Bekanntmachung des Hinweises auf die Patenterteilung:
**18.02.2009   Patentblatt 2009/08**

(51) Int Cl.:
*C08J 3/00* (2006.01)      *C08K 7/16* (2006.01)

(21) Anmeldenummer: 05107548.9

(22) Anmeldetag: **17.08.2005**

(54) **Mikrogel-enthaltende duroplastische Zusammensetzung**

Microgel-containing thermosetting composition

Composition thermodurcissable contenant un microgel

(84) Benannte Vertragsstaaten:
**DE FR GB IT**

(30) Priorität: **24.12.2004   DE 102004062551**

(43) Veröffentlichungstag der Anmeldung:
**28.06.2006   Patentblatt 2006/26**

(73) Patentinhaber:
• **Rhein Chemie Rheinau GmbH**
  **68219 Mannheim (DE)**
• **LANXESS Deutschland GmbH**
  **51369 Leverkusen (DE)**

(72) Erfinder:
• **Ziser, Torsten Dr.**
  **69488, Birkenau (DE)**

• **Heiliger, Ludger Dr.**
  **67433, Neustadt (DE)**
• **Früh, Thomas Dr.**
  **67117, Limburgerhof (DE)**
• **Obrecht, Werner Dr.**
  **47447, Moers (DE)**

(74) Vertreter: **Gille Hrabal Struck Neidlein Prop Roos**
**Patentanwälte**
**Brucknerstrasse 20**
**40593 Düsseldorf (DE)**

(56) Entgegenhaltungen:
EP-A- 1 123 332          WO-A-20/05033186
US-A- 4 055 607          US-A- 4 539 348
US-A- 5 229 434

**Beschreibung**

EINLEITUNG

Die vorliegende Erfindung betrifft duroplastische Zusammensetzungen, die vernetzte Mikrogele enthalten, Verfahren zu ihrer Herstellung, Ihre Verwendung zur Herstellung von Formartikeln oder Beschlchtungen.

STAND DER TECHNIK

Der Einsatz von Mikrogelen zur Eigenschaftssteuerung von Elastomeren ist bekannt (z.B. EP-A-405216, DE-A 4220563, GB-PS 1078400, DE 19701487, DE 19701489, DE 19701488, DE 19834804, DE 19834803, DE 19834802, DE 19929347, DE 19939865, DE 19942620, DE 19942614, DE 10021070, DE 10038488, DE10039749, DE 10052287, DE 10056311 und DE 10061174). In den Druckschriften EP-A-40521 6, DE-A-4220563 sowie in GB-PS-1078400 wird die Verwendung von CR-, BR- und NBR-Mikrogelen in Mischungen mit doppelbindungshaltigen Kautschuken beansprucht. In DE 19701489 wird die Verwendung von nachträglich modifizierten Mikrogelen In Mischungen mit doppelbindungshaltigen Kautschuken wie NR, SBR und BR beschrieben.

Die Verwendung von Mikrogelen zur Herstellung von duroplastschen Zusammensetzungen wird In keiner dieser Schriften gelehrt. Duroplaste sind engmaschig vernetzte Polymere mit dreidimenslonalem Aufbau, die unlöslich und unschmelzbar sind. Bekannte Beispiele für Duroplaste sind z,B. Phenol-Formaldeyhd-Harze, Melamin-Formaldehyd-Harze, ungesättigte Polyesterharze, Epoxid-Harze, ungesättigte Polyester-Harze, RIM-Polyurethansysteme, Übllcherwelse werden die Duroplaste durch das Zusammengeben von mindestens zwei reaktionsfähigen, höherfunktionellen Komponenten hergestellt; die Funktionalität der Reaktanden ist typischerweise ≥3. Im Anschluss an die Durchmischung der Komponenten gibt man die MIschung der Duromerkomponenten in eine Form und lässt das Gemisch aushärten. Diese Harzsysteme sind jedoch vielfach spröde und daher anfällig für schlagbedingte Schäden, Viele Verfahren zur Steigerung der Schlagzähigkeit solcher Harzsysteme wurden untersucht. Als ein Ergebnis solcher Untersuchungen wurden zahlreiche neue Epoxidharzmonomere auf dem Markt eingeführt. Andere Anstrengungen, um die Harzzähigkeit zu verbessern, bestanden im Einschluss von löslichen Thermoplasten oder Elastomeren im Harzsystem.

Die US-A-4,656,208 offenbart ein vielphasiges System, wobei ein reaktives Polyäthersulfon-Oligomer und ein aromatisches Diamin-Aushärtungsmittel reagieren, um die komplexen vielphasigen Domänen zu bilden.

Die DE 3782589 T2 (EP 0259100 B1) offenbart einen Duroplast der eine glasartige diskontinuierliche Phase, die eine Kautschukphase enthält, aufweist. Bei der Herstellung der duroplastischen Zusammensetzung wird die Kautschukphase unter Verwendung eines flüssigen Kautschuks in-situ bei der Bildung der duroplastischen Zusammensetzung gebildet.

Die US 5089560 offenbart eine härtbare Matrixharzformulierung, der von 1 bis 25 Gew,-% vernetzte carboxylierte Kautschukpartikel zugesetzt sind. Die kleinste Partikelgröße der Kautschukpartikel liegt im Bereich von 1 bis 75 $\mu$m, entsprechend 1000 bis 75000 nm. Die Verwendung kleinerer Kautschukpartikel wird nicht gelehrt.

Ähnlich offenbart die US 5532296 (entsprechend DE 69232851 T2) ein schlagzähes, hitzehärtbares Harzsystem, dass von etwa 1 bis etwa 10 Gewichtsprozent relativ zum Gesamtsystemgewicht eines funktionalisierten, etwas vernetzten Elastomers in der Form von vorgeformten Partikeln enthält. Die Größe der Partikel liegt zwischen 2 und 75 $\mu$m, entsprechend 2000 bis 75000 nm. Die Verwendung kleinerer Kautschukpartikel wird nicht gelehrt,

Aufgabe der vorliegenden Erfindung war es unter anderem mechanische Eigenschaften duroplastischer Zusammensetzungen, wie die Schlagzähigkeit und die Bruchdehnung, bei gleichzeitiger Erhaltung der Shore-Härte zu verbessern. Weiterhin bestand die Aufgabe der vorliegenden Erfindung darin, duroplastische Zusammensetzungen mit einer besonders homogenen Verteilung der dispergierten Elastomerphase reproduzierbar bereitzustellen. Die Erfinder fanden, dass die Verwendung besonders feintelliger Mikrogele makroskopische Inhomogenitäten, von denen unter mechanischer Belastung Risse ausgehen können, in der Duroplasten-Matrix vermeldet und zur Bildung besonders homogener Bauteile bei verringerten Ausschussraten führt.

Ferner sollte ein Verfahren zur Herstellung mikrogel-enthaltenden duroplastischen Zusammensetzungen bereitgestellt werden, dass es gewissermaßen erlaubt, eine Elastomerphase für einen gegebenen Duroplasten Im voraus maßzuschneidern, um damit die Probleme der In-situ-Bildung der Elastomerphase, wie eine schlechte Reproduzierbarkeit, zu vermeiden.

Die vorliegenden Erfinder konnten zeigen, dass es möglich Ist, die vorstehend beschriebenen Aufgaben Insbesondere durch eine besondere Dispergierung von separat hergestellten, besonders feinteiligen Kautschukmikrogelen In den Vorstufen der Duroplastherstellung zu lösen. Besonders vorteilhaft ist auch der Einsatz von kautschukartigen Mikrogelen, die an der Oberfläche mit speziellen funktionellen Gruppen ausgerüstet sind.

DETAILLIERTE BESCHREIBUNG DER ERFINDUNG:

Die vorliegende Erfindung stellt somit eine duroplastische Zusammensetzung bereit, enthaltend mindestens einen duroplastischen Kunststoff (A) und mindestens ein vernetztes Mikrogel (B) wobei das Mikrogel (B) funktionelle Gruppen aufweist, wobei die funktionellen Gruppen aus der Gruppe ausgewählt sind, die aus einer Hydroxyl-, Epoxy-, Amin-, Isocyanat- und einer ungesättigten Gruppe besteht, und der duroplastische Kunststoff (A) ausgewählt ist aus der Gruppe, die besteht aus:

- Diallylphthalat-Harzen (PDAP),
- Epoxidharzen (EP),
- Aminoplasten,
- Phenoplasten,
- Furfurylalkohol-Formaldehyd-Harzen (FF),
- Ungesättigten Polyesterharzen (UP),
- Polyurethan-Harzen (PU),
- Reaktionsspritzgegossenen Polyurethan-Harzen (RIM-PU),
- Furanharzen,
- Vinylesterharzen (VE, VU),
- Polyester-Melamin-Harzen, und
- Gemischen von Diallylphthalat- (PDAP) oder Diallyl-Isophthalat (PDAIP)-Harzen.

Mikrogel- bzw.Mikrogelphase (B)

Das In der erfindungsgemäßen Zusammensetzung verwendete Mikrogel (B) ist bevorzugt ein vernetztes Mikrogel auf der Basis von Homopolymeren oder statistischen Copolymeren. Bei den erfindungsgemäß verwendeten Mikrogelen handelt es sich somit bevorzugt um vernetzte Homopolymere oder vernetzte statistische Copolymere, Die Begriffe Homopolymere und statistische Copolymere sind dem Fachmann bekannt und beispielsweise erläutert bei Vollmert, Polymer Chemistry, Springer 1973.
Das in der erfindungsgemäßen Zusammensetzung verwendete vernetzte Mikrogel (B) Ist bevorzugt ein nicht durch energiereiche Strahlung vernetztes Mikrogel. Energiereiche Strahlung meint hier zweckmäßig elektromagnetische Strahlung einer Wellenlänge von weniger als 0,1 $\mu$m .
Die Verwendung von durch energiereiche Strahlung vollständig homogen vernetzten Mikrogelen Ist nachteilig, well sie im großtechnischen Maßstab Probleme der Arbeltssicherhelt aufwirft. Weiterhin kommt es In Zusammensetzungen, die unter Verwendung von durch energiereiche Strahlung vollständig homogen vernetzter Mikrogelen hergestellt wurden, bei schlagartiger Beanspruchung zu Abreißeffekten zwischen Matrix und dispergierter Phase, wodurch die mechanischen Eigenschaften, das Quellverhalten und dieSpannungsrisskorrosion beeinträchtigt werden.
Die in der erfindungsgemäßen Zusammensetzung enthaltenen Primärpartikel des Mikrogels (B) weisen bevorzugt eine annähernd kugelförmlge Geometrie auf. Als Primärpartikel nach DIN 53206:1992-08 werden die durch geeignete physikalische Verfahren (Elektronenmikroskop), als Individuen erkennbare, In der kohärenten Phase dispergierten Mikrogelteilchen bezeichnet (Vgl. z.B. Römpp Lexikon, Lacke und Druckfarben, Georg Thieme Verlag, 1998). Eine "annähernd kugelförmige" Geometrie bedeutet, dass die dispergierten Primärpartikel der Mikrogele bei der Ansicht eines Dünnschnitts mit einem Elektronenmikroskop erkennbar Im wesentlichen eine kreisförmige Fläche bilden. Dadurch unterscheiden sich die erfindungsgemäßen Zusammensetzungen wesentlich von durch die "In-situ"-Verfahren erzeugten dispergierten Kautschuk-Phasen, die im allgemeinen eine irreguläre Form aufweisen. Die erfindungsgemäß dispergierten Mikrogelpartikel behalten ihre aus dem separaten Herstellungsverfahren der Mikrogel-Kautschukphase resultierende, im wesentlichen einheitliche Kugelform beim Dispergieren in den Ausgangsstoffen der Duroplastherstellung praktisch ohne Veränderung bei. Durch die weiter unten beschriebenen Verfahren der Dispergierung kann die feine Teilchengrößenverteilung der Mikrogele im Mikrogellatex annähernd auf die duroplastische Zusammensetzung übertragen werden, da bei der Bildung der duroplastischen Zusammensetzung praktisch keine Veränderung der Mikrogele und ihrer Partikelgrößenverteilung auftritt.
In den in der erfindungsgemäßen Zusammensetzung enthaltenen Primärpartikeln des Mikrogels (B) beträgt die Abweichung der Durchmesser eines einzelnen Primärpartikels, definiert als

$$[(d1 - d2) / d2] \times 100,$$

worin d1 und d2 zwei beliebige Durchmesser eines beliebigen Schnittes des Primärpartikels sind und d1 > d2 ist, bevorzugt weniger als 250 %, bevorzugter weniger als 200 %, noch bevorzugter weniger als 100 %, noch bevorzugter weniger als 80 % und noch bevorzugter weniger als 50 %.

Bevorzugt weisen mindestens 80 %, bevorzugter mindestens 90 %, noch bevorzugter mindestens 95% der Primärpartikel des Mikrogels eine Abweichung der Durchmesser, definiert als

$$[ (d1 - d2) / d2] \times 100,$$

worin d1 und d2 zwei beliebige Durchmesser eines beliebigen Schnittes des Primärpartikels sind und d1 > d2 ist, von weniger als 250 %, bevorzugter weniger als 200 %, noch bevorzugter weniger als 100 % auf, noch bevorzugter weniger als 80 % und noch bevorzugter weniger als 50 %.

Die vorstehend erwähnte Abweichung der Durchmesser der einzelnen Partikel wird nach folgendem Verfahren bestimmt. Zunächst wird wie in den Beispielen beschrieben eine TEM-Aufnahme eines Dünnschnitts der erfindungsgemäßen Zusammensetzung hergestellt. Dann wird eine transmissionselektronenmikroskopische Aufnahme bei einer Vergrößerung von 1 0000fach bis 200000fach hergestellt, In einer Fläche von 833,7 x 828,8 nm wird manuell an 10 Mikrogel-Primärpartikeln der größte und der kleinste Durchmesser als d1 und d2 bestimmt. Liegt die Abweichung bei allen 10 Mikrogel-Primärpartikeln jeweils unter 250 %, bevorzugter unter 200 %, noch bevorzugter unter 100 %, noch bevorzugter unter 80 % und noch bevorzugter unter 50 %, so weisen die Mikrogel-Primärpartikeln das oben definierte Merkmal der Abweichung auf.

Liegt in der Zusammensetzung die Konzentration der Mikrogele so hoch, dass eine starke Überlagerung der sichtbaren Mikrogel-Primärpartikel erfolgt, kann die Auswertbarkeit durch vorheriges, geeignetes Verdünnen der Messprobe verbessert werden.

In der erfindungsgemäßen Zusammensetzung weisen die Primärpartikel des Mikrogels (B) bevorzugt einen durchschnittlichen Teilchendurchmesser von 5 bis 500 nm, bevorzugter von 20 bis 400 nm, noch bevorzugter von 20 bis 300, bevorzugter von 20 bis 250 nm, noch bevorzugter 20 bis 99 nm, noch bevorzugter 40 bis 80 nm auf.

Da sich der durchschnittliche Teilchendurchmesser der Primärpartikel der Mikrogele bei der Herstellung der duroplastischen Zusammensetzungen der Erfindung im wesentlich nicht verändert, entspricht der durchschnittliche Teilchendurchmesser der Primärpartikel der Mikrogele in der duroplastischen Zusammensetzung praktisch dem durchschnittlichen Teilchendurchmesser der Primärpartikel in der Dispersion der Mikrogele im Ausgangsprodukt des duroplastischen Kunststoffes (A) bzw. einer Lösung davon, Er kann an solchen Dispersionen nach DIN 53206 durch Ultrazentrifugation bestimmt werden. Um sicherzustellen, dass in der erfindungsgemäßen vernetzten duroplastischen Zusammensetzung der durchschnittliche Teilchendurchmesser der Primärpartikel im beanspruchten Bereich liegt, ist daher insbesondere eine solche Dispersion der Mikrogele in den Ausgangsverbindungen zu verwenden, bei der der durch Ultrazentrifugation bestimmte durchschnittliche Teilchendurchmesser im beanspruchten Bereich liegt, Elektronenmikroskopische Aufnahmen der auf diese Weise erhaltenen erfindungsgemäßen Zusammensetzungen belegen, dass die Partikeldurchmesser der Primärpartikel und im wesentlichen auch etwaiger Agglomerate davon praktisch alle in den oben definierten Bereichen liegen.

Weiterhin gilt, dass durch das erfindungsgemäße Verfahren der Dispergierung der getrockneten Mikrogele in den Ausgangsprodukten der Duroplaste in der Regel eine Deagglomerierung der Partikel bis auf die Stufe der Primärpartikel gelingt. Dies bedeutet zum Einen, dass in den erfindungsgemäßen duroplastischen Zusammensetzungen die mittlere Partikelgröße der Primärpartikel praktisch und bevorzugt im wesentlichen der mittleren Partikelgröße (Größe = Durchmesser im Rahmen der vorliegenden Erfindung) aller Partikel einschließlich der Agglomerate entspricht. Bevorzugt ist daher erfindungsgemäß auch der durchschnittliche Teilchendurchmesser aller Partikel in den erfindungsgemäßen duroplastischen Zusammensetzungen im Bereich von 5 bis 500 nm, bevorzugter von 20 bis 400 nm, noch bevorzugter von 20 bis 300 nm, bevorzugter von 20 bis 250 nm, noch bevorzugter 20 bis 99 nm, noch bevorzugter 40 bis 80 nm auf.

Zum Anderen entspricht der durchschnittliche Teilchendurchmesser aller Partikel in den erfindungsgemäßen duroplastischen Zusammensetzungen im wesentlichen auch dem durchschnittlichen Teilchendurchmesser aller Partikel im Latex der Mikrogelherstellung, worin ebenfalls im wesentlichen keine Agglomerate vorliegen. Der mittlere Durchmesser aller Partikel in den erfindungsgemäßen duroplastischen Zusammensetzungen kann, da er bei der DuroplastHerstellung durch Härten bzw. Vernetzen praktisch keiner Veränderung mehr unterliegt, durch übliche Verfahren insbesondere durch Ultrazentrifugation an der Dispersion der Mikrogele in den Ausgangsstoffen der Duroplastischen Kunststoffe (A), wie unten erwähnt oder aber - eine ausreichende Redispergierung bei der Duroplastherstellung vorausgesetzt - auch am Latex der Mikrogelherstellung gemessen und mit diesen näherungsweise gleichgesetzt werden.

In der erfindungsgemäßen Zusammensetzung weisen die eingesetzten Mikrogele (B) zweckmäßig in Toluol bei 23°C unlösliche Anteile (Gelgehalt) von mindestens etwa 70 Gew.-%, bevorzugter mindestens etwa 80 Gew.-%, noch bevorzugter mindestens etwa 90 Gew.-% auf. Der in Toluol unlösliche Anteil wird dabei in Toluol bei 23° bestimmt. Hierbei werden 250 mg des Mikrogels in 25 ml Toluol 24 Stunden unter Schütteln bei 23°C gequollen. Nach Zentrifugation mit 20,000 Upm wird der unlösliche Anteil abgetrennt und getrocknet. Der Gelgehalt ergibt sich aus dem Quotienten des getrockneten Rückstandes und der Einwaage und wird in Prozent angegeben.

In der erfindungsgemäßen Zusammensetzung weisen die eingesetzten Mikrogele (B) zweckmäßig In Toluol bei 23°C einen Quellungsindex von weniger als etwa 80, bevorzugter von weniger als 60, noch bevorzugter von weniger als 40 auf. So können die Quellungsindizes der Mikrogele (QI) besonders bevorzugt zwischen 1 - 15 und 1-10 liegen. Der Quellungsindex wird aus dem Gewicht des In Toluol bei 23° für 24 Stunden gequollenen lösungsmittelhaltigen Mikrogels (nach Zentrifugation mit 20.000 Upm) und dem Gewicht des trockenen Mikrogels berechnet:

$$QI = \text{Naßgewicht des Mikrogels} / \text{Trockengewicht des Mikrogels.}$$

Zur Ermittlung des Quellungsindex läßt man genauer 250 mg des Mikrogels in 25 ml Toluol 24 h unter Schütteln quellen. Das Gel wird abzentrifugiert, feucht gewogen und anschließend bei 70 °C bis zur Gewichtskonstanz getrocknet und nochmals gewogen,

In der erfindungsgemäßen Zusammensetzung weisen die eingesetzten Mikrogele (B) zweckmäßig Glastemperaturen Tg von -100°C bis +120°C, bevorzugter von -100°C bis +50°C, noch bevorzugter von -80°C bis +20°C auf.

In der erfindungsgemäßen Zusammensetzung weisen die eingesetzten Mikrogele (B) zweckmäßig eine Breite des Glasübergangs von größer als 5 °C, bevorzugt größer als 10°C, bevorzugter größer als 20 °C auf. Mikrogele, die eine solche Breite des Glasübergangs aufweisen, sind in der Regel - im Gegensatz zu vollständig homogen strohlenvernetzten Mikrogelen - nicht vollständig homogen vernetzt. Dies führt dazu, dass die Moduländerung von der Matrixphase zur dispergierten Phase nicht unmittelbar ist. Hierdurch kommt es bei schlagartiger Beanspruchung nicht zu Abreißeffekten zwischen Matrix und dispergierter Phase, wodurch die mechanischen Eigenschaften, das Quellverhalten und die Spannungsrisskorrosion vorteilhaft beeinflusst werden.

Die Bestimmung der Glastemperatur (Tg) und der Breite des Glasübergangs (ΔTg) der Mikrogele erfolgt mittels Differential-Scanning-Kalorimetrie (DSC). Für die Bestimmung von Tg und ΔTg werden zwei Abkühl/Aufheiz-Zyklen durchgeführt, Tg und ΔTg werden im zweiten Aufheiz-Zyklus bestimmt. Für die Bestimmungen werden 10-12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt und dann mit einer Geschwindigkeit von 20 K/min auf +150°C aufgeheizt wird. Der zweite DSC-Zyklus wird durch sofortige Abkühlung der Probe begonnen, sobald eine Probentemperatur von +150°C erreicht ist. Die Abkühlung erfolgt mit einer Geschwindigkeit von ungefähr 320 K/min. Im zweiten Aufheizzyklus wird die Probe wie im ersten Zyklus noch einmal auf +150°C aufgeheizt. Die Aufheizgeschwindigkeit im zweiten Zyklus ist erneut 20 K/min. Tg und ΔTg werden graphisch an der DSC-Kurve des zweiten Aufheizvorgangs bestimmt. Für diesen Zweck werden an die DSC-Kurve drei Geraden angelegt, Die 1 .Gerade wird am Kurventeil der DSC-Kurve unterhalb Tg, die 2. Gerade an dem durch Tg verlaufenden Kurvenast mit Wendepunkt und die 3.Gerade an dem Kurvenast der DSC- Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet, Die Glastemperatur Tg erhält man als Mittelwert dieser beiden Temperaturen und die Breite des Glasübergangs ΔTg erhält man aus der Differenz der beiden Temperaturen.

Die in der erfindungsgemäßen Zusammensetzung enthaltenen, nicht durch energiereiche Strahlung vernetzten Mikrogele (B) auf der Basis von Homopolymeren oder statistischen Copolymeren können in an sich bekannter Weise hergestellt werden (s. zum Beispiel EP-A- 405 216, EP-A-8541 71 , DE-A 4220563, GB-PS 1078400, DE 197 01 489.5, DE 197 01 488.7, DE 198 34 804.5, DE 198 34 803.7, DE 198 34 802.9, DE 199 29 347.3, DE 199 39 865.8, DE 199 42 620.1, DE 199 42 614.7, DE 100 21 070.8, DE 100 38 488.9, DE 100 39 749.2, DE 100 52 287.4, DE 100 56 311.2 und DE 100 61 174.5). In den Patent(anmeldungen) EP-A 405 216, DE-A 4220563 sowie in GB-PS 1078400 wird die Verwendung von CR-, BR- und NBR-Mikrogelen in Mischungen mit doppelbindungshaltigen Kautschuken beansprucht. In DE 197 01 489.5 wird die Verwendung von nachträglich modifizierten Mikrogelen in Mischungen mit doppelbindungshaltigen Kautschuken wie NR, SBR und BR beschrieben.

Die Herstellung und die Charakterisierung vernetzter Kautschukmikrogele ist weiterhin beschrieben in US-A 5395891 (BR-Mikrogele), US 6127488 (SBR-Mikrogele) und DE 19701487 (NBR-Mikrogele). Die hier beschriebenen Mikrogele sind nicht mit speziellen funktionellen Gruppen modifiziert. Kautschukmikrogele, die spezielle funktionelle Gruppen enthalten, sind insbesondere in US 6184296, 19919459 sowie in DE 10038488 beschrieben, In diesen Publikationen erfolgt die Herstellung der funktionalisierten Mikrogele in mehreren Verfahrensschritten, Im ersten Schritt wird der Basis-Kautschuklatex durch Emulsionspolymerisation hergestellt. Alternativ kann auch von kommerziell verfügbaren Kautschuklatices ausgegangen werden. Die Einstellung des gewünschten Vernetzungsgrads (charakterisiert durch Gelgehalt und Quellungsindex) erfolgt in einem nachgeschalteten Verfahrensschritt, vorzugsweise durch Vernetzung des Kautschuklatex mit einem organischen Peroxid. Die Durchführung der Vernetzungsreaktion mit Dicumylperoxid ist beschrieben in DE 10035493. Die Funktionalisierung wird im Anschluss an die Vernetzungsreaktion durchgeführt. In US 6184296 erfolgt eine Modifikation der vernetzten Kautschukpartikel durch Schwefel oder schwefelhaltige Verbindungen und in DE 19919459 sowie in DE 10038488 erfolgt eine Pfropfung der vernetzten Kautschuklatices mit funktionellen Monomeren wie Hydroxyethylmethacrylat und Hydroxybutylacrylat,

Im Gegensatz zur mehrstufigen Synthese der funktionalisierten Mikrogele, die in den obengenannten Patenten (anmeldungen) beschrieben ist, erfolgt die Herstellung der erfindungsgemäß verwendeten Mikrogele bevorzugt in einem 1 -Stufenverfahren, bei dem die Vernetzung und die Funktionalisierung schon während der Emulsionspolymerisation erfolgt (Direktvernetztes Mikrogel).

Unter Mikrogelen werden erfindungsgemäß zweckmäßig Kautschukpartikel verstanden, die insbesondere durch Vernetzung folgender Kautschuke erhalten werden:

| | |
|---|---|
| BR: | Polybutadien, |
| ABR: | Butadien/Acrylsäure-C 1-4Alkylestercopolymere, |
| IR: | Polyisopren, |
| SBR: | statistische Styrol-Butadien-Copolymerisate mit Styrolgehalten von 1-90, vorzugsweise 5-50 Gewichtsprozent, |
| X-SBR: | carboxylierte Styrol-Butadien-Copolymerisate |
| FKM: | Fluorkautschuk, |
| ACM: | Acrylatkautschuk, |
| NBR: | Polybutadien-Acrylnitril-Copolymerisate mit Acrylnitrilgehalten von 5-100, vorzugsweise 10-50 Gewichtsprozent, |
| X-NBR: | carboxlierte Nitrilkautschuke |
| CR: | Polychloropren |
| IIR: | Isobutylen/Isopren-Copolymerisate mit Isoprengehalten von 0,5-10 Gewichtsprozent, |
| BIIR: | bromierte Isobutylen/Isopren-Copolymerisate mit Bromgehalten von 0,1-10 Gewichtsprozent, |
| CIIR: | chlorierte Isobutylen/Isopren-Copolymerisate mit Bromgehalten von 0,1-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| CO und ECO: | Epichlorhydrinkautschuke, |
| Q: | Silikonkautschuke, |
| AU: | Polyesterurethanpolymerisate, |
| EU: | Polyetherurethanpolymerisate |
| ENR: | Epoxydierter Naturkautschuk oder Mischungen davon. |

Die Herstellung der unvernetzten Mikrogel-Ausgangsprodukte erfolgt zweckmäßig durch folgende Methoden:

1. Emulsionspolymerisation
2. Außerdem können natürlich vorkommende Latices wie z.B. Naturkautschuklatex eingesetzt werden.

In der erfindungsgemäßen duroplastischen Zusammensetzung sind die verwendeten Mikrogele (B) bevorzugt solche, die durch Emulsionspolymerisation und Vernetzung erhältlich sind.

Bei der Herstellung der erfindungsgemäß verwendeten Mikrogele durch Emulsionspolymerisation werden beispielsweise folgende, radikalisch polymerisierbare Monomere eingesetzt: Butadien, Styrol, Acrylnitril, Isopren, Ester der Acryl- und Methacrylsäure. Tetrafluorethylen, Vinylldenfluorid, Hexafluorpropen, 2-Chlorbutadien, 2,3-Dichlorbutadien sowie doppelbindungshaltige Carbonsäuren wie z.B. Acrylsäure, Methacrylsäure, Maleinsäure, Itakonsäure, doppelbindungshaltige Hydroxyverbindungen wie z.B. Hydroxyethylmethacrylat, Hydroxyethylacrylat, Hydroxybutylmethacrylat, Hydroxypolyethylenglykolmethacrylat, Methoxypolyethylenglykolmethacrylat, Stearylmethacrylat, Aminfunktionalisierte (Meth)acrylate, Acrolein, N-Vinyl-2-pyrrolidon, N-Allyl-Homstoff und N-Allyl-Thioharnstoff, sekundäre Amino-(meth)-acrylsäureester wie 2-tert-Butylaminoethylmethacrylat und 2-tert-Butylaminoethylmethacrylamid. Die Vernetzung des Kautschukgels kann direkt während der Emulsionspolymerisation, wie durch Copolymerisation mit vernetzend wirkenden multlfunktlonellen Verbindungen oder durch anschließende Vernetzung wie untenstehend beschrieben erreicht werden, Die direkte Vernetzung während der Emulsionspolymerisation ist bevorzugt. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2- bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8.Oxethy-

leneinhelten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluß an die Emulsionspolymerisation setzt man am besten die Latices ein, die bei der Emulsionspolymerisation erhalten werden. Auch Naturkautschuklatices können auf diese Weise vernetzt werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, t-Butylperbenzoat sowie organische Azoverbindungen, wie Azo-bis-isobutyronitril und Azo-biscyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid,

Die optimale Temperatur zur Durchführung der Nachvernetzung ist naturgemäß von der Reaktivität des Vernetzers abhängig und kann bei Temperaturen von Raumtemperatur bis ca. 180 °C gegebenenfalls unter erhöhtem Druck durchgeführt werden (siehe hierzu Houben-Weyl, Methoden der organischen Chemie, 4. Auflage, Band 14/2, Seite 848), Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C Doppelbindung durch Hydrazin wie in US 5,302,696 oder US 5,442,009 beschrieben oder ggf. andere Hydrlerungsmitteln, beispielsweise Organometallhydrldkomplexe erfolgen,

Vor, während oder nach der Nachvernetzung kann ggf, eine Teilchenvergrößerung durch Agglomeration durchgeführt werden.

Bei dem erfindungsgemäß verwendeten Herstellungsverfahren werden stets nicht vollständig homogen vernetzte Mikrogele erhalten, die die oben beschriebenen Vorteile aufweisen können.

Als Mikrogele zur Herstellung der erfindungsgemäßen Zusammensetzung können sowohl nicht-modifizierte Mikrogele, die Im wesentlichen keine reaktiven Gruppen Insbesondere an der Oberfläche aufweisen als auch, modifizierte, mit funktionellen Gruppen, Insbesondere an der Oberfläche modifizierte Mikrogele verwendet werden. Letztere können durch chemische Umsetzung der bereits vernetzten Mikrogele mit gegenüber C=C-Doppelbindungen reaktiven Chemikalien hergestellt werden. Diese reaktiven Chemikalien sind Insbesondere solche Verbindungen, mit deren Hilfe polare Gruppen wie z.B. Aldehyd-, Hydroxyl-, Carboxyl-, Nitril- sowie schwefelhaltige Gruppen, wie z.B. Mercapto-, Dithiocarbamat-, Polysulfid-, Xanthogenat-, Thiobenzthiazol- und/oder Dithiophosphorsäuregruppen und/oder ungesättigte Dicarbonsäuregruppen an die Mikrogele chemisch gebunden werden können. Dies trifft auch auf N,N'-m-Phenylendiamin zu. Ziel der Mikrogelmodifizierung Ist die Verbesserung der Mikrogelverträglichkeit mit der Matrix, um eine gute Verteilbarkeit bei der Herstellung sowie eine gute Ankopplung zu erreichen.

Besonders bevorzugte Methoden der Modifizierung sind die Pfropfung der Mikrogele mit funktionellen Monomeren sowie die Umsetzung mit niedermolekularen Agentien.

Für die Pfropfung der Mikrogele mit funktionellen Monomeren geht man zweckmäßigerweise von der wässrigen Mikrogeldispersion aus, die man mit polaren Monomeren wie Acrylsäure, Methacrylsäure, Itakonsäure, Hydroxyethyl-(meth)-acrylat, Hydroxypropyl-(meth)-acrylat, Hydroxybutyl-(meth)-acrylat, Acrylamid, Methacrylamid, Acrylnitril, Acrolein, N-Vinyl-2-pyrrolidon, N-Allyl-Harnstoff und N-Allyl-Thioharnstoff sowie sekundären Amino-(meth)-acrylsäureester wie 2-tert-Butylaminoethylmethacrylat und 2-tert-Butylaminoethylmethacrylamid unter den Bedingungen einer radikalischen Emulsionspolymerisation umsetzt.

Auf diese Weise werden Mikrogele mit einer Kern/Schale-Morphologie erhalten, wobei die Schale eine hohe Verträglichkeit mit der Matrix aufweisen soll. Es ist wünschenswert, daß das im Modifikationsschritt verwendete Monomer möglichst quantitativ auf das unmodifizierte Mikrogel aufpropft. Zweckmäßigerweise werden die funktionellen Monomere vor der vollständigen Vernetzung der Mikrogele hinzudosiert.

Für eine Oberflächenmodifikation der Mikrogele mit niedermolekularen Agentien kommen Insbesondere folgende Reagentlen in Frage: elementarer Schwefel, Schwefelwasserstoff und/oder Alkylpolymercaptanen, wie 1,2-Dimercaptoethan oder 1,6-Dimercaptohexan, desweiteren Dialkyl- und Dialkylaryldithiocarbamat, wie den Alkalisalzen von Dimethyldithlocarbamat und/oder Dibenzyldithiocarbamat, ferner Alkyl- und Arylxanthogenaten, wie Kallumethylxanthogenat und Natriumisopropylxanthogenat sowie die Umsetzung mit den Alkali- oder Erdalkalisalzen der Dibutyldithiophosphorsäure und Dioctyldithiophosphorsäure sowie Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindung können Radikalstarter wie organische und anorganische Peroxide und/oder Azoinitiatoren, zugesetzt werden.

Auch eine Modifikation doppelbindungshaltiger Mikrogele wie z.B. durch Ozonolyse sowie durch Halogenierung mit Chlor, Brom und Jod kommen infrage. Auch eine weitere Umsetzung modifizierter Mikrogele wie z.B, die Herstellung hydroxylgruppenmodifizierter Mlkrogele aus epoxdierten Mikrogelen wird als chemische Modifikation von Mikrogelen verstanden.

In einer bevorzugten Ausführungsform sind die Mikrogele durch Hydroxyl-Gruppen, Epoxy-, Amin-, Isocyanat- oder eine ungesättigte Gruppe (z. B. C=C) insbesondere auch an der Oberfläche davon modifiziert. Der Hydroxylgruppengehalt der Mikrogele wird durch Umsetzung mit Acetanydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den Im Einzelfall gestellten Anforderungen und liegt im Bereich von 0,05 bis 30 Gewichtsprozent, bezogen auf die Gesamtmenge an eingesetztem Kautschuk-Mikrogel, besonders bevorzugt sind 0,5-10 Gewichtsprozent bezogen auf Gesamtmenge an Kautschukgel.

Die Modifizierungsreaktionen können bei Temperaturen von 0-180 °C, bevorzugt 20-95 °C, ggf, unter Druck von 1-30 bar, durchgeführt werden. Die Modlfizierungen können an Kautschuk-Mlkrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

Die Verwendung von modifizierten, insbesondere hydroxy-, epoxy-, amin-, isocyanat- oder durch ungesättigte Gruppe (z. B. C=C)modifizierten Mikrogelen ist bevorzugt.

Der mittlere Durchmesser der hergestellten Mikrogele kann mit hoher Genauigkeit beispielsweise auf 0,1 Mikrometer (100 nm) +/-0,01 Mikrometer (10 nm) eingestellt werden, so dass beispielsweise eine Teilchengrößenverteilung erreicht wird, bei der mindestens 75 % aller Mikrogel-Partikel zwischen 0,095 Mikrometer und 0,105 Mikrometer groß sind. Andere mittlere Durchmesser der Mikrogele insbesondere Im Bereich zwischen 5 bis 500 nm lassen sich mit gleicher Genauigkeit (mindestens Gew.-75 % aller Telichen liegen um das Maximum der integrierten Korngrößenvertellungskurve (bestimmt durch Ultrazentrifugation) in einem Bereich von + 10 % oberhalb und unterhalb des Maximums) herstellen und einsetzen.

Dadurch kann die Morphologie der in der erfindungsgemäßen Zusammensetzung dispergierten Mikrogele praktisch "punktgenau" eingestellt und damit die Eigenschaften der erfindungsgemäßen Zusammensetzung sowie der daraus beispielsweise hergestellten Duromeren eingestellt werden,

Die Aufarbeitung der so hergestellten Mikrogele kann beispielsweise durch Eindampfen, Koagulation, durch Co-koagulation mit einem weiteren Latexpolymer, durch Gefrierkoagulation (vgl. US-PS 21 871 46) oder durch Sprühtrocknung erfolgen. Bei der Aufarbeitung durch Sprühtrocknung können auch handelsübliche Fließhilfsmittel wie beispielsweise $CaCO_3$ oder Kieselsäure zugesetzt werden.

### Duroplastische Kunststoffe (A)

Duroplastische Zusammensetzungen im Sinne der Erfindung sind insbesondere solche, die ein Schubmodul von mehr als 10 MPa im Gebrauchstemperaturbereich (ca. -150 bis ca. +200°C) aufweisen. Die Bestimmung des Schubmoduls erfolgt gemäß DIN ISO 6721 -1 : 1996.

In der erfindungsgemäßen Zusammensetzung beträgt das Gewichtsverhältnis duroplastischer Werkstoff (A) / Mikrogel (B) zweckmäßig von 0,5 : 99,5 zu 99,5 : 0,5, bevorzugt 1 : 99 bis 99 :1, bevorzugter von 10 : 90 bis 90 : 10, besonders bevorzugt 20 : 80 bis 80 : 20.

Der duroplastische Kunststoff (A) in der duroplastischen Zusammensetzung der Erfindung wird bevorzugt ausgewählt aus der Gruppe, die besteht aus Polykondensationsduroplasten, Polyadditionsduroplasten und Polymerisationsduroplasten. Die Polykondensationsduroplaste werden bevorzugt aus der Gruppe ausgewählt sind, die aus Phenolharzen, Aminoharzen, Furanharzen und Polyimiden besteht, die Polyadditionsduroplaste werden bevorzugt aus der Gruppe ausgewählt, die aus Epoxidharzen und Polyurethanen besteht, und die Polymerisationsduroplaste werden bevorzugt aus Allylverbindungen, ungesättigten Polyestern, Vinyl- bzw. Acrylestern gebildet. Bevorzugt werden die duroplastische Kunststoffe (A) ausgewählt aus der Gruppe die besteht aus:

- Diallylphthalat-Harzen (PDAP),
- Epoxidharzen (EP),
- Aminoplasten, wie Harnstoff-Formaldehyd-Harze (UF), Melamin-formaldehyd-Harze (MF), Melamin-/Phenol-Formaldehyd-Harze (MPF),
- Phenoplasten, wie Melamin-Phenol-Formaldehyd-Harze (MP), Phenol-Formaldehyd-Harze (PF), Kresol-Formaldehyd-Harze (CF), Resorcin-Formaldehyd-Harze (RF), Xylenol-Formaldehyd-Harze (XF),
- Furfurylalkohol-Formaldehyd-Harzen (FF),

- Ungesättigten Polyesterharzen (UP),
- Polyurethan-Harzen (PU)
- Reaktionsspritzgegossene Polyurethan-Harzen (RIM-PU)
- Furanharzen
- Vinylesterharzen (VE, VU),
- Polyester-Melamin-Harze
- Gemische von Diallylphthalat- (PDAP) oder Diallylisophthalat (PDAIP)-Harzen

Besonders bevorzugt sind sogenannte RIM-Polyurethane, Amino- und Phenoplaste, Epoxyharze und UP-Harze.

Solche duroplastischen Kunststoffe sind an sich bekannt, und bezüglich Ihrer Herstellung kann beispielsweise verwiesen werden auf Saechtling, Kunststoff Taschenbuch, 28. Auflage, Kapitel 4.17; Ullmann's Ecyclopedia of Industrial Chemistry, 5, Auflage, Band A26, 665 ff "Thermosets" (dort Insbesondere Herstellverfahren); Ullmann ibid. Band 9, 547, ""Epoxy Resins"; Römpp Lexikon Chemie; 10. Auflage H-L, Stichwort Duroplaste und dort zitierte Literatur; Ellas, Makromoleküle, Band 2, Technologie, 5, Auflage, Kapitel 15.6 "Duroplaste"; weiterhin auf den oben erwähnten Stand der Technik insbesondere zu Epoxyharzsystemen, wie US 5089560, US 5532296, EP 0259100, EP 0525418.

Bevorzugt enthalten die erfindungsgemäßen duroplastischen Zusammensetzungen ein oder mehrere Kunststoffadditive, die bevorzugt aus der Gruppe ausgewählt werden, die besteht aus: Füll- und Verstärkungsstoffen, Pigmenten, UV-Absorbern, Flammschutzmitteln, Entschäumer, Entlüfter, Benetzungs- und Dispergierhilfsmittel, Fasern, Gewebe, Katalysatoren, Verdickungsmittel, Anti-Absetzmittel, Antl-Schrumpfadditive, Thixotropierungsmittel, Trennmittel, Verlaufsmittel, Mattierungsmittel, Korrosionsinhibitoren, Slip-Additive, Biozide. Bevorzugt werden die Kunststoffadditive aus anorganischen und/oder organischen Füllstoffen, wie Holzmehl, Zellstoff, Baumwollfasern, Kunstseidenstränge, mineralische Fasern, Gesteinsmehl, Glimmer, Kurz- und Langfasern, Glasmatten, Kohlefasern, Weichmachern, anorganischen und/oder organischen Pigmenten, Flammschutzmitteln, Mitteln gegen Schädlinge, wie z.B. Termiten und Mittel gegen Marderbiss, und sonstige üblichen Kunststoffadditiven ausgewählt. Besonders bevorzugt sind faserartige Füllstoffe. Diese können in den erfindungsgemäßen Zusammensetzungen In einer Menge von bis zu etwa 40 Gew.-%, bevorzugt bis zu etwa 20 Gew.-%, bezogen auf die Gesamtmenge der Zusammensetzung enthalten sein.

Die Erfindung betrifft weiterhin die Verwendung von vernetzten Mikrogelen (B) zur Herstellung von duroplastischen Zusammensetzungen,

Die erfindungsgemäßen duroplastischen Zusammensetzung werden insbesondere nach einem Verfahren hergestellt, das die folgenden Schritte umfasst:

a) Dispergieren des Mikrogels (B) in einem oder mehreren zur Bildung des duroplastischen Kunststoffes (A) befähigten Ausgangsproduktes oder einer Lösung davon, welche ggf. Kunststoffadditiven enthalten, die vorteilhaft vor der Dispergierung zugesetzt werden,
b) Gegebenenfalls Zusatz weiterer Komponenten und
c) Härtung der erhaltenen Dispersion.

Besonders bevorzugt erfolgt Schritt c) unter gleichzeitiger Formgebung.

Die vorstehend erwähnten, zur Bildung des duroplastischen Kunststoffes (A) befähigten Ausgangsprodukte werden bevorzugt aus Monomeren, Ollgomeren (Präpolymeren) oder Vernetzungsmltteln dafür ausgewählt,

Bevorzugte zur Bildung des duroplastischen Kunststoffes (A) befähigte Ausgangsprodukte werden aus der Gruppe ausgewählt, die besteht aus:

- Polyolen und Mischungen davon,
- aliphatischen Polyolen und Mischungen davon, aliphatischen Polyetherpolyolen und Mischungen davon,
- aliphatischen Polyesterpolyolen und Mischungen davon,
- aromatische Polyesterpolyolen und Mischungen davon,
- Polyetherpolyesterpolyole und Mischungen davon,
- ungestättigten Polyestern und Mischungen davon,
- aromatischen Alkoholen oder Mischungen davon,
- Styrol,
- Polyisocyanaten,
- Isocyanatharze,
- Epoxidharze,
- Phenolharze,
- Furanharze,
- Caprolactam,

- Dicyclopentadien,
- Aliphatischen Polyaminen,
- Polyamidoamine,
- Aromatische Polyamine,
- (Meth)acrylaten,
- Polyallyl-Verbindungen,
- Vinylester,
- Polykondensations-Duroplaste im A-Zustand sowie
- Derivaten oder Lösungen der vorstehend genannten Ausgangsprodukte.

Besonders bevorzugt sind aliphatische Polyole und Mischungen davon, aromatische Alkohole, Styrol und ungesättigte Polyester,

Bei den vorstehend erwähnten weiteren Komponenten handelt es sich insbesondere um die weitere (zweite) Komponente zur Bildung des duroplastischen Kunststoffes, insbesondere um den Härter, wie beispielsweise ein Polyisocyanat, ein Polyamin, ein Formaldehydspender und Styrol. Weiterhin kann es sich auch um die erwähnten Kunststoffadditive handeln, wie beispielsweise faserartige Füllstoffe und andere.

Die Härtung erfolgt unter den für den duroplastischen Kunststoff üblichen Bedingungen.

In einer besonders bevorzugten Ausführungsform des erfindungsgemäßen Verfahrens wird das Mikrogel (B) und das zur Bildung des duroplastischen Kunststoffes befähigte Ausgangsprodukt, welches ggf. Kunststoffadditiven enthält, die vorteilhaft vor der Dispergierung zugesetzt werden, gemeinsam der Behandlung mittels eines Homogenisators, einer Kugelmühle, einer Perlmühle, eines Walzenstuhles, einer Dreiwalze, einer Ein- oder Mehrwellen-Extruderschnecke, eines Kneters und/ oder eines Dissolvers unterworfen.

In einer bevorzugten Ausführungsform erfolgt das Dispergieren des Mikrogels (B) und des zur Bildung des duroplastischen Kunststoffes befähigten Ausgangsproduktes mittels eines Homogenisators, einer Perlmühle, einer Dreiwalze und/ oder eines Dissolvers. Nachteilig an der Perlmühle ist der vergleichsweise eingeschränkte Viskositätsbereich (tendenziell dünne Zusammensetzungen), hohe Reinigungsaufwand, teure Produktwechsel der verwendbaren Zusammensetzungen sowie der Abrieb von Kugeln und Mahlapparatur

Besonders bevorzugt erfolgt die Homogenisierung der erflndungsgemäßen Zusammensetzungen mittels eines Homogenisators oder einer Dreiwalze. Nachteilig an der Drelwalze Ist der vergleichsweise eingeschränkte Viskositätsbereich (tendenziell sehr dicke Zusammensetzungen), geringer Durchsatz und die nicht geschlossene Arbeitsweise (schlechter Arbeitsschutz).

Sehr bevorzugt erfolgt die Homogenisierung der zur Bildung der erfindungsgemäßen Zusammensetzungen befähigten Ausgangsprodukte (Vorstufen) mittels eines Homogenisators. Der Homogenisator erlaubt es, dünnflüssige und dickflüssige Zusammensetzungen bei hohem Durchsatz zu verarbeiten (hohe Flexibilität), Produktwechsel sind vergleichsweise schnell und problemlos möglich.

Die Dispergierung der Mikrogele (B) im zur Bildung des duroplastischen Kunststoffes befähigten Ausgangsprodukt erfolgt im Homogenisator im Homogenisierventil (s, Abb, 1).

Bei dem erfindungsgemäß eingesetzten Verfahren werden Agglomerate in Aggregate und/oder Primärpartikel zerteilt, Agglomerate sind physikalisch trennbare Einheiten, bei deren Dispergierung keine Änderung der Primärpartikelgröße erfolgt.

Das zu homogenisierende Produkt tritt in das Homogenisierventil mit langsamer Geschwindigkeit ein und wird im Homogenisierspalt auf hohe Geschwindigkeiten beschleunigt. Die Dispergierung erfolgt hinter dem Spalt hauptsächlich aufgrund von Turbulenzen und Kavitation (William D. Pandolfe, Peder Baekgaard, Marketing Bulletin der Fa. APV Homogeniser Group - "High-pressure homogenisers processes, product and applications").

Die Temperatur der erfindungsgemäß verwendeten MikrogelDispersion der Vorstufen beträgt bei Aufgabe in den Homogenisator zweckmäßig -40 - 140°C, vorzugsweise 20 - 80 °C.

Die zu homogenisierende Zusammensetzung wird zweckmäßig bei einem Druck von 20 bis 4000 bar, bevorzugt 100 - 2000 bar, sehr bevorzugt 300 - 1500 bar im Gerät homogenisiert. Die Anzahl der Durchläufe richtet sich nach der gewünschten Dispergiergüte und kann zwischen einem und 40, bevorzugt einem und zwanzig, bevorzugt zwischen einem und zehn, bevorzugter einem und vier Durchgängen variieren.

Die erfindungsgemäß hergestellten duroplastischen Zusammensetzungen besitzen dadurch eine besonders feine Partikelverteilung, die insbesondere durch die Behandlung der Mikrogel enthaltenden Vorstufen mit dem Homogenisator erreicht wird, der auch hinsichtlich der Flexibilität des Verfahrens bezüglich variierender Viskositäten der flüssigen Vorstufen und notwendigen Temperaturen sowie der Dispergiergüte äußerst vorteilhaft ist, Durch die feine Verteilung der Mikrogele (B) im zur Bildung des duroplastischen Kunststoffes befähigten Ausgangsprodukt, bis hin zur Teilchenverteilung der Mikrogele im ursprünglichen Mikrogellatex, ist eine besonders gute Verteilung der Mikrogele in dem duroplastischen Kunststoff (A) möglich, was nach dem Stand der Technik bislang nicht möglich war.

Dadurch werden die mechanischen Eigenschaften der duroplastischen Zusammensetzungen überraschend verbessert.

Die so erhaltenen Mikrogelpasten der Duroplastvorstufen können bequem bis zur Bildung der Duroplaste durch Aushärtung gegebenenfalls unter Zusatz von Härtern gelagert werden, Aufgrund ihrer feinen Verteilung kommt es nicht zu nennenswertem Absetzen.

Die Erfindung betrifft auch die duroplastischen Zusammensetzungen, die nach dem vorstehend beschriebenen Verfahren erhältlich sind.

Die Erfindung betrifft weiterhin auch die Verwendung der erfindungsgemäßen duroplastischen Zusammensetzungen als Formkörper, als Beschichtung oder Verbindungsmaterial. Sie schließt auch die Herstellung mikrogelgefüllter sogenannter Prepregs ein. Die Erfindung betrifft weiterhin auch die Verwendung der erfindungsgemäßen duroplastischen Zusammensetzungen in elektronischen Bauteilen, wie als Gehäuse für elektronische Geräte, in Konstruktionsbauteilen, wie Baumaterialen.

Die Erfindung betrifft weiterhin die Verwendung von Mikrogelen mit einem durchschnittlichem Teilchendurchmesser der Primärpartikel von bevorzugt 5 bis 500 nm als rheologisches Additiv, insbesondere als Verdicker und/oder Thixotropiermittel, in einem oder mehreren zur Bildung des duroplastischen Kunststoffes (A) befähigten Ausgangsproduktes oder einer Lösung davon, welches Reaktanden der mittleren Funktionalität je Molekül von typischerweise $\geq$3 enthält, sowie Zusammensetzungen, die ein oder mehrere vernetzte Mikrogele (B), deren durchschnittlicher Teilchendurchmesser der Primärpartikel von 5 bis 500 nm beträgt, und ein oder mehrere zur Bildung eines duroplastischen Kunststoffes (A) befähigte Ausgangsprodukte enthalten, worin die Ausgangsprodukte mindestens zu 20 Gew.-% aus vernetzbaren Komponenten mit einer mittleren Funktionalität von $\geq$3 bestehen.

Die vorliegende Erfindung wird durch die folgenden Beispiele weiter erläutert. Die Erfindung ist jedoch nicht auf den Offenbarungsgehalt der Beispiele beschränkt.

BEISPIELE

**Beispiele zur Herstellung und Charakterisierung der Mikrogele**

**Herstellungsbeispiele für die Mikrogele:**

Nachfolgend wird die Herstellung der Mikrogele OBR 980, OBR 1009, OBR 1135, OBR 1155, OBR 1209, OBR 1212, OBR 1225, OBR 1236, OBR 1283, OBR 1320D, Micromorph 4P (OBR 1209) beschrieben, die in den weiteren Beispielen verwendet wurden:

Die Mikrogele mit den Bezeichnungen OBR 980, OBR 1009 sowie OBR 1135 werden entsprechend der Lehre von DE 10035493 A1 bzw. WO 02/08328 hergestellt, wobei für die Vernetzung die in folgender Tabelle angegebenen Mengen an Dicumylperoxid (DCP) eingesetzt wurden:

| Mikrogelbezeichnung | DCP [Gew%]] |
|---|---|
| OBR 980 | 2,5 |
| OBR 1009 | 1,0 |
| OBR 1135 | 2,5 |

Die Mikrogele OBR 1 209, 1212, 1 225, 1 236, 1 283 und OBR 1320 D werden durch Emulsionspolymerisation hergestellt, wobei folgende Monomere eingesetzt werden: Butadien, Styrol, Trimethylolpropantrimethacrylat (TMPTMA), Ethylenglykoldimethacrylat (EGDMA), Hydroxyethylmethacrylat (HEMA)und Methacrylsäure (MAS). Die für die Herstellung der Mikrogele verwendeten Monomeren sowie wesentliche Rezepturbestandteile sind in folgender Tabelle zusammengefasst:

Tabelle "Herstellung der Mikrogele"

| Mikrogel | Wasser | Emulgatoren | | Monomere | | | | | |
|---|---|---|---|---|---|---|---|---|---|
| | | Mersolat K30/951) | TCD2) (20%ig) | Butadien | Styrol | TMPTMA (90 %ig) | HEMA (96 %ig) | EGDMA | MAS |
| | [g] | [g] | [g] | [g] | [g] | [g] | [g] | [g] | [g] |
| OBR 1 155 | 20000 | 137 | - | 9500 | - | - | - | 500 | 50,3 (*) |

(fortgesetzt)

| Mikrogel | Wasser | Emulgatoren | | Monomere | | | | | |
| --- | --- | --- | --- | --- | --- | --- | --- | --- | --- |
| | | Mersolat K30/951) (20%ig) | TCD2) (20%ig) | Butadien | Styrol | TMPTMA (90 %ig) | HEMA (96 %ig) | EGDMA | MAS |
| | [g] | [g] | [g] | [g] | [g] | [g] | [g] | [g] | [g] |
| OBR 1209 | 20000 | 137 | 250 | 5070 | 3380 | 1250 | 300 | - | - |
| OBR 1212 | 20000 | 137 | 250 | 4650 | 3100 | 1250 | 1000 | - | - |
| OBR 1225 | 20000 | 137 | 250 | 7425 | 825 | 750 | 1000 | - | - |
| OBR 1236 | 20000 | 137 | - | 7650 | 850 | 500 | 1000 | - | - |
| OBR 1283 | 20000 | 250 | - | 7830 | 870 | 300 | 1000 | - | - |
| OBR 1320 D | 20000 | 263 | - | 7830 | 870 | 300 | 1000 | - | - |
| RFL 403A | 20000 | 137 | 250 | 4450 | 4650 | 150 | 750 | - | |

(*) zusammen mit MAS wurden 96g KOH im Reaktor vorgelegt

1) Mersolat K 30®/95 (Bayer AG) sind die Na-Salze langkettiger Alkylsulfonsäuren (Isomerenmischung). Der Gehalt an aktiver Substanz beträgt 95 Gew. %

2) Na-Salz des Umsetzungsprodukts von bis-hydroxyformyliertem Dicyclopentadien mit Hexahydrophthalsäureanhydrid. Es wird eine wässrige Lösung mit 20 Gew.% aktiver Substanz eingesetzt (Der Emulgator wurde hergestellt nach US 5,100,945

Für die Herstellung der Mikrogele wurden zuerst die in der Tabelle angegebenen Mengen der Emulgatoren Mersolat K30/95 und TCD in Wasser gelöst und in einem 40 l-Autoklaven vorgelegt, Der Autoklav wurde dreimal evakuiert und mit Stickstoff beaufschlagt. Danach wurden die in der Tabelle angegebenen Monomeren zugegeben. Die Monomeren wurden unter Rühren in der Emulgatorlösung bei 30°C emulgiert, Anschließend wurde eine wässrige Lösung bestehend aus 171 g Wasser, 1,71 g Ethylendiamintetraessigsäure (Merck-Schuchardt), 1,37 g Eisen(II)-sulfat*7H$_2$0, 3,51 g Natriumformaldehydsulfoxylat-hydrat (Merck-Schuchardt) sowie 5,24 g Trinatriumphosphat*12H$_2$O zudosiert.

Die Reaktion wurde durch Zugabe von 5,8 g p-Menthanhydroperoxid, 50%ig (Trigonox NT 50 der Akzo-Degussa), In 250 g Wasser mit 10,53 g Mersolat K30/95 gelöst, gestartet (die hierfür verwendete Wassermenge ist In der in der Tabelle angegebenen Gesamtmenge Wasser enthalten)

Nach 2,5 Stunden Reaktionszeit wurde die Reaktionstemperatur auf 40 °C erhöht. Nach einer weiteren Stunde Reaktionszeit wurde mit gleicher Menge initiatorlösung (NT50 / Wasser / Mersolat K30/95) nachaktiviert. Hierbei wurde die Polymerisationstemperatur auf 50°C erhöht. Bei Erreichen eines Polymerisationsumsatzes>95 % wurde die Polymerisation durch Zugabe einer wässrigen Lösung von 23,5 g Diethylhydroxylamin gelöst In 500 g Wasser abgestoppt (die hierfür verwendete Wassermenge ist in der in der Tabelle angegebenen Gesamtmenge Wasser enthalten).

Danach wurden nicht umgesetzte Monomeren durch Strippen mit Wasserdampf aus dem Latex entfernt.

Der Latex wurde filtriert und wie im Beispiel 2 der US 6399706 mit Stabilisator versetzt, koaguliert und getrocknet.

Die Gele wurden sowohl im Latexzustand als auch teilweise im redispergierten Zustand in Polyol mittels Ultrazentrifugation (Durchmesser dz und spezifische Oberfläche Ospez) sowie als Festprodukt bezüglich der Löslichkeit in Toluol (Gelgehalt, Quellingsindex (QI)), durch acidimetrische Titration (OH-Zahl und COOH-Zahl) mittels DSC (Glastemperatur (Tg) und Breite der Tg-Stufe) charakterisiert.

Die analytischen Daten der verwendeten Mikrogele sind in der nachfolgenden Tabelle zusammengestellt.

Tabelle: "Eigenschaften der verwendeten Mikrogele"

| Mikrogel | Durchmesser | | | $O_{spez.}$ | Gelgehalt | Quellungsindex | Tg | Breite der Tg-Stufe | OH-Zahl | Säure-Zahl |
|---|---|---|---|---|---|---|---|---|---|---|
| | $d_{10}$ [nm] | $d_{50}$ [nm] | $d_{80}$ [nm] | $[m^2/g]$ | [Gew.%] | | [°C] | [°C] | $[mg_{KOH}/g_{Pol.}]$ | $[mg_{KOH}/g_{Pol.}]$ |
| OBR 980 | 39 | 48 | 55 | - | 91,7 | 5,6 | - | - | - | - |
| OBR 1009 | 41,9 | 56 | 65,9 | 112 | 95,4 | 6,0 | -13,5 | - | - | - |
| OBR 1135 | 102 | 120 | 131 | 52,2 | 97,8 | 3.7 | -39 | - | 4,2 | 4,6 |
| OBR 1155 | 59,6 | 75,8 | 86,2 | 88,5 | 97,0 | 8,3 | -77 | 10,2 | 1,5 | 3,1 |
| OBR 1 209 | 54 | 61 | 65 | 100 | 96,8 | 3,9 | -18,5 | 31 | 10,9 | 1,7 |
| OBR 1212 | 47 | 55 | 60 | 107 | 99,2 | 4,4 | -5 | 38 | 42,2 | 1,7 |
| OBR 1225 | 42,3 | 51,5 | 57,5 | 122 | 97.7 | 7,05 | -59,5 | 22,8 | 43.6 | 1,3 |
| OBR 1 236 | 41 | 49 | 57 | 125 | 97,3 | 6,6 | -63 | 20 | 45 | 2,1 |
| OBR 1283 | 39 | 48 | 53 | 135 | 99,4 | 8,8 | -65 | 9,4 | 37,6 | 2,5 |
| OBR 1 320 D | 38 | 49 | 56 | 133 | 99,2 | 7,6 | -65,5 | 11,4 | 44,3 | 3,6 |
| RFL 403 | 41 | 54 | 64 | 112 | 87,4 | 8,1 | -15 | 19,8 | 25,2 | 7,9 |

In der Tabelle bedeuten:

$O_{spez}$: spezifische Oberfläche in $m^2/g$

$d_{50}$ ($d_z$): Der Durchmesser $\overline{d}_z$ ist nach DIN 53 206 als der Median- oder Zentralwert der Massenverteilung definiert, oberhalb und unterhalb dessen, jeweils die Hälfte aller Teilchengrößen liegt, Der Teilchendurchmesser der Latexteilchen wird mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere 250 (1972) 782; H. G. Müller, "Automated determination of particle-size distributions of dispersions by analytical ultracentrifugotion", Colloid Polym. Sci. 267 (1989) 1113; H.G. Müller, "Determination of very broad particle size distributions via interference optics in the analytical ultracentrifuge ", Progr. Colloid Polym. Sci. 127 (2004) 9).

Die Durchmesserangaben $d_{50}$ im Latex und für die Primärpartikel in den erfindungsgemäßen Zusammensetzungen sind praktisch gleich, wie es in Beispiel 1 gezeigt ist, da sich die Teilchengröße der Mikrogelteilchen bei der Herstellung der erfindungsgemäßen Zusammensetzung praktisch nicht ändert. Dies bedeutet auch, dass die Mikrogele im umgebenden Medium nicht gequollen sind.

Glastemperatur

Für die Bestimmung von Tg und der Breite des Glasübergangs wird das Gerät DSC-2 von Perkin-Elmer benutzt.

Quellungsindex

Der Quellungsindex wurde wie folgt bestimmt:

Der Quellungsindex wird aus dem Gewicht des in Toluol bei 23° für 24 Stunden gequollenen lösungsmittelhaltigen Mikrogels und dem Gewicht des trockenen Mikrogels berechnet:

$$\text{Quellungsindex} = \text{Naßgewicht des Mikrogels} / \text{Trockengewicht des Mikrogels.}$$

Zur Ermittlung des Quellungsindex läßt man 250 mg des Mikrogels in 25 ml Toluol 24 h unter Schütteln quellen. Das mit Toluol gequollene (nasse) Gel wird nach Zentrifugation mit 20.000 Upm feucht gewogen und anschließend bei 70 °C bis zur Gewichtskonstanz getrocknet und nochmals gewogen.

OH-Zahl (Hydroxylzahl)

Die OH-Zahl (Hydroxylzahl) wird nach DIN 53240 bestimmt, und entspricht der Menge an KOH in mg, die der Essigsäure-Menge äquivalent ist, die bei der Acetylierung mit Essigsäureanhydrid von 1 g Substanz freigesetzt wird.

Säurezahl

Die Säurezahl wird nach DIN 53402 bestimmt und entspricht der Menge KOH in mg, die erforderlich ist um ein g der Substanz zu neutralisieren.

Gelgehalt

Der Gelgehalt entspricht dem in Toluol unlöslichen Anteil bei 23°C. Er wird wie oben beschrieben bestimmt. Der Gelgehalt ergibt sich aus dem Quotienten des getrockneten Rückstandes und der Einwaage und wird in Gewichtsprozent angegeben.

Glasübergangstemperatur

Die Glasübergangstemperaturen wurden wie oben erwähnt bestimmt.

Breite des Glasübergangs:

Die Breite des Glasübergangs wurde wie oben beschrieben bestimmt.
Exemplarisches Beispiel zur Herstellung von Mikrogelpasten in Vorstufen der Duromerherstellung:

- Herstellung einer Mikrogelpaste auf Basis OBR 1 236 und Bayflex VP PU 331F20

Hydroxylgruppenmodifiziertes SBR-Gel (OBR 1236) in Bayflex VP PU 331F20

In dem nachfolgend beschriebenen Beispiel wird gezeigt, daß unter Verwendung von hydroxylgruppenmodifizierten Mikrogelen auf Basis von SBR Zusammensetzungen, die hauptsächlich Primärpartikel mit einem mittleren Teilchendurchmessern hauptsächlich von ca. 40 nm enthalten, in einem Homogenisator durch Anwendung von 900 bis 1000 bar hergestellt werden können.

In der nachfolgenden Tabelle ist die Zusammensetzung der Mikrogelpaste angegeben:

| | |
|---|---|
| 1. Bayflex VP PU 33IF20 | 85,000 |
| 2. OBR 1236 | 15,000 |
| Summe | 100,000 |

Bei Bayflex VP PU 33IF20 handelt es sich um ein Produkt/Polyol (Polyether basierend) der Bayer AG, welches Diethylmethylbenzoldiamin, Polyoxypropylendiamin und Alkylaminopoly(oxyalkylen)ol enthält, HST931 7 und HST9354 unterschieden sich in dem verwendeten Polyether-Typ.
OBR 1236 ist ein vernetztes, oberflächenmodifiziertes Kautschukgel auf Basis SBR der Fa. Rheinchemie Rheinau GmbH.

Für die Herstellung der erfindungsgemäßen Zusammensetzung wurde Bayflex VP PU 33IF20 vorgelegt und OBR 1 236 unter Rühren mittels Dissolver zugeben. Die Mischung wurde mindestens einen Tag lang stehen gelassen und dann mit dem Homogenisator weiterverarbeitet.

Die Zusammensetzung wurde bei Raumtemperatur in den Homogenisator gefüllt und bei 900 bis 1000 bar im Batchbetrieb 4 mal durch den Homogenisator gegeben. Beim ersten Durchgang erwärmt sich die Mikrogelpaste auf ca. 40°C, beim zweiten Durchgang auf ca. 70°C. Danach wurde Mikrogelpaste auf Raumtemperatur abgekühlt und ein drittes und viertes Mal dispergiert.

Die in den folgenden Beispielen dargestellten Zusammensetzungen wurden analog hergestellt, wobei Abweichungen in der Zahl der Durchgänge oder des Homogenisierdruckes in den jeweiligen Beispielen angegeben sind.

**Beispiel 1:**

**Charakterisierung einer Mikrogelpaste auf Basis Bayflex VP PU 33IF20 und OBR 1236 mittels Ultrazentrifuge und Lichtstreuung**

1 . Bestimmung der differentiellen und der integralen Massenverteilung mittels Ultrazentrifugenmethode

Die vorstehend erhaltene Zusammensetzung wurde mit verschiedenen Methoden charakterisiert. Hiermit wird beispielhaft die Potenz des Verfahrens aufgezeigt.

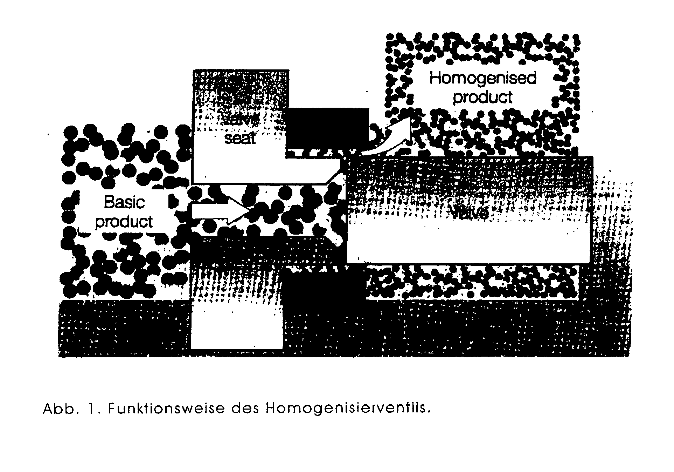

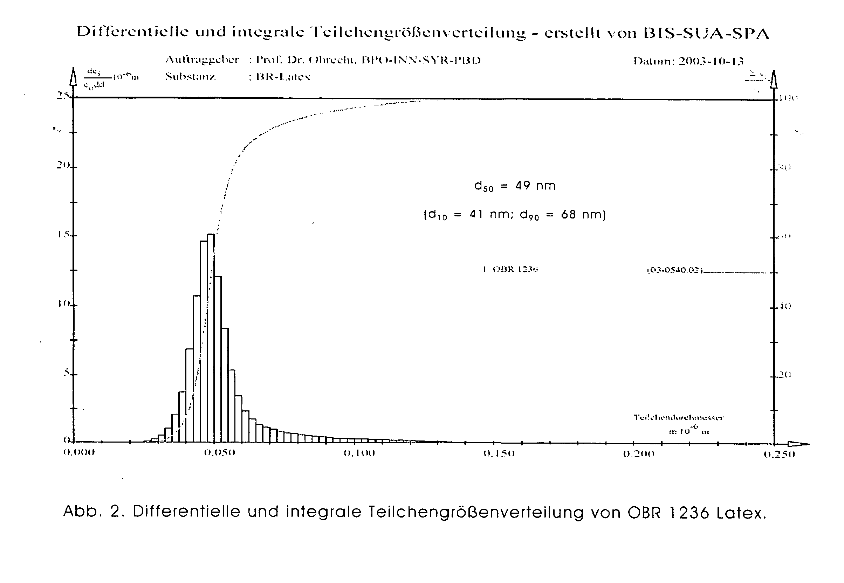

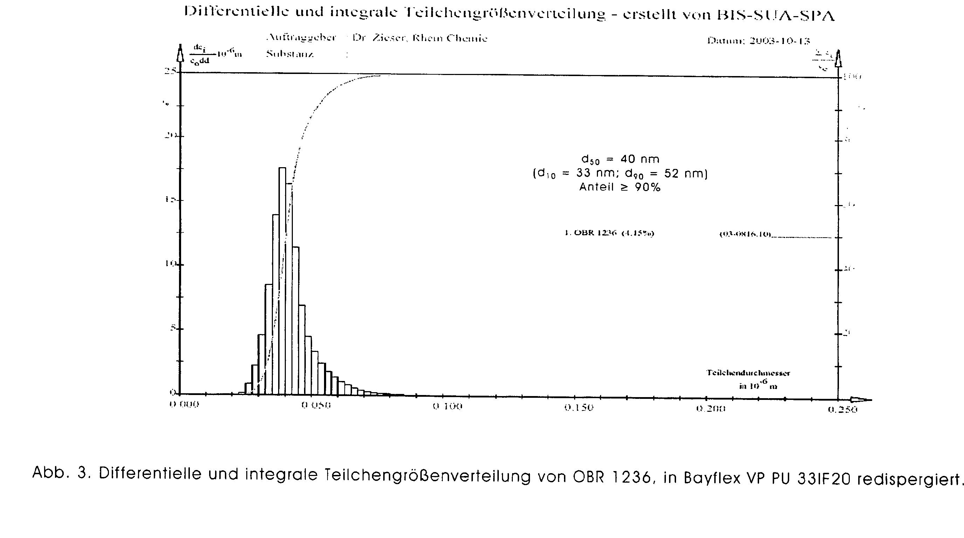

In Abb. 2 ist die Teilchengrößenverteilung des OBR 1236 - Latices dargestellt; in Abb. 3 ist die Teilchengrößenverteilung von in Bayflex VP PU 33IF20 redispergiertem OBR 1236 wiedergegeben.

Aus den Abbildungen 2 und 3 wird deutlich, dass es gelungen ist, festes OBR 1236 in Bayflex VP PU 33IF20 zu redispergieren. Der mittlere Teilchendurchmesser des OBR-Latex und des redispergierten OBR 1236 unterscheiden sich nur wenig; der tendenziell geringere Durchmesser von OBR 1236 in Bayflex VP PU 33IF20 ist durch die höhere Kompressibilität von Bayflex VP PU 33IF20 im Vergleich zu Wasser bedingt (Abb. 3). In beiden Materialien liegen vor allem Primärpartikel vor,

2. Bestimmung des mittleren hydrodynamischen Durchmessers durch Lichtstreuung

Der mittlere hydrodynamische Durchmesser wurde an dieser Probe durch Lichtstreuung per ALV-Korrelator gemessen.

| Probenbezeichnung | Durchmesser |
|---|---|
| OBR 1236 (4:15%)[1] | 89,0 nm |

(fortgesetzt)

| OBR 1236 (4:15%)[2] | 85,7 nm |
|---|---|

1) Verdünnte Probe ohne Vorfiltration 2) Verdünnte Probe mit 1,0 $\mu$m Spritzenvorsatzfilter vorfiltriert

Die Unterschiede zur Ultrazentrifugenmessung ergeben sich daraus, dass bei der dynamischen Lichtstreuung große Teilchen überproportional eingehen.

Zudem liefert die Ultrazentrifugenmethode eine sehr exakte Verteilung und die dynamische Lichtstreuung nicht eine Verteilung sondern den mittleren hydrodynamischen Durchmesser,

**Beispiel 2:**

**Rheologie der Mikrogelhaltigen Bayflex VP PU 33IF20-Pasten**

Die Rezepturen in der Tab. 2 entsprechen der im Herstellungsbeispiel aufgeführten Rezeptur, Abweichende Mikrogelmengen sind vermerkt,

Bei Baydur VP PU 1498 mod - HST9516, ein Polyether basierendes Polyol, handelt es sich um ein Produkt der Bayer AG, welches Alkylaminopoly(oxyalkylen)ol, Diethylmethylbenzoldiamin und Alkylaminocarbonsäureamid enthält; die Viskosität nach DIN 53019 beträgt bei 20°C ca. 2,000 Pas (Sicherheitsdatenblatt (093398/05).

Bei Desmophen VP PU 3218, ein Polyetherpolyol, handelt es sich um ein Produkt der Bayer AG. Die Viskosität von Desmophen VP PU 3218 nach DIN 53019 beträgt bei 25°C ca. 2,000 Pas (Sicherheitsdatenblatt (048252/09).

Die Viskosität von Bayflex VP PU 33IF20 nach DIN 53019 beträgt bei 20°C ca. 2,000 Pas (Sicherheitsdatenblatt (0922459/09).

Tab. 2. Viskositäten $\eta$ bei verschiedenen Schergeschwindigkeiten $\nu$ für Pasten, die sich aus Bayflex VP PU 331F20 und verschiedenen Mengen an OBR 1236 zusammensetzen; 20°C.

| Versuchs-Bezeichnung | Charakteristika | $\eta$ bei $\nu$= 5 sec$^{-1}$ | $\eta$ bei $\nu$ =100 sec$^{-1}$ | $\eta$ bei $\nu$ = 1000 sec$^{-1}$ | $\eta$ bei $\nu$ = 0,1 sec$^{-1}$ | Quotient $\eta$ (0,1 sec-1) / $\eta$ (1000 sec-1) |
|---|---|---|---|---|---|---|
| | | [Pas] | [Pas] | [Pas] | [Pas] | [-] |
| | | | | | | |
| PU33IF20 2 | PU33IF20-1236 25%/ 1x500/2x950 bar | 205 | 41 | 16,7 | 5300 | 317 |
| PU331F20 4 | PU33IF20-1236 25%/ 1x500/4x950 bar | 179 | 32,8 | 3,57 | 1480 | 415 |
| PU331F20 8 | PU33IF20 OBR1236(15%) 4x950 bar | 47,2 | 13,5 | 7,82 | 1370 | 175 |

Aus der Tab. 2 ist ersichtlich, dass OBR 1 236 einen starken verdickenden Effekt auf Bayflex VP PU 33IF20 hat; Bayflex VP PU 33IF20 wird durch OBR 1 236 thixotrop.

Mit zunehmender Dispergiergüte sinken die Viskositäten ab.

Die Mischungen in der Tabelle 3 bestehen aus Bayflex VP PU 33IF20 und OBR 1320D. Die jeweiligen Mikrogelmengen und Dispergierbedingungen sind vermerkt.

Tab. 3. Viskositäten bei verschiedenen Schergeschwindigkeiten für Pasten, die sich aus Bayflex VP PU 33IF20 bzw. Baydur PU1498/mod - HST9516 und verschiedenen Mengen an OBR 1320D zusammensetzen; 60°C.

| Versuchs-Bezeichnung | Charakteristika | Viskosität bei Scherrate 5s$^{-1}$ | Viskosität bei Scherrate 1000s$^{-1}$ | Viskosität bei Scherrate 5s$^{-1}$/ Viskosität bei Scherrate 1000s$^{-1}$ |
|---|---|---|---|---|
| | | [Pa*s] | [Pa*s] | [ ] |
| | | | | |
| PU33IF20 - HST9317 | 15% OBR 1320D; 4x950 bar | 5,79 | 0,68 | 9 |
| PU33IF20 - HST9354 | 15% OBR 1320D; 4x950 bar | 33,20 | 0,88 | 38 |
| PU1498/mod - HST9516 | 25% OBR 1320D; 4x950 bar | 17,00 | 1,02 | 17 |
| OBR 1320D hat in Bayflex VP PU 331F20, HST9354 eine höhere Viskosität als in Bayflex VP PU 33IF20,HST9317, Auch bei 60°C zeigt sich der stark verdickende Effekt des Mikrogels in verschiedenen flüssigen Matrices. | | | | |

Die Mischungen in der Tab. 4 bestehen aus Desmophen VP PU 3218 und OBR 1236. Die jeweiligen Mikrogelmengen und Dispergierbedingungen sind vermerkt, Im folgenden wird gezeigt, dass Mikrogelpasten bei geeigneter Mikrogelkonzentration auch mit der Dreiwalze hergestellt werden können.

Tab. 4. Viskositäten bei verschiedenen Schergeschwindigkeiten für Pasten, die sich aus Desmophen VP PU 3218 und verschiedenen Mengen an OBR 1 236 zusammensetzen; 20°C.

| Versuchs-Bezeichnung | Charakteristika | η bei ν = 5 sec$^{-1}$ | η bei ν = 100 sec$^{-1}$ | η bei ν = 1000 sec$^{-1}$ | η bei ν = 0,1 sec$^{-1}$ | Quotient η (0,1 sec-1) / η (1000 sec-1) |
|---|---|---|---|---|---|---|
| | | [Pas] | [Pas] | [Pas] | [Pas] | |
| D3218 6 | D3218 OBR1236 (30%) 1x30; 3x40[1] | 216 | 32,8 | 5,24 | 2030 | 387 |
| D3218 8 ( | D3218 OBR123640%) 1x30: 1x40[1] | 723 | 71,5 | 3,71 | 2390 | 644 |
| 1) hergestellt mit der Dreiwalze bei 30 oder 40 bar Walzendruck | | | | | | |

Auch auf Desmophen VP PU 3218 hat OBR 1236 einen starken verdickenden Effekt; Desmophen VP PU 3218 wird durch OBR 1236 stark thixotrop. Die dargestellte, überraschend starke Verdickung durch Mikrogele geeigneter Zusammensetzung zeigt deren Potential als rheologische Additive.

**Beispiel 3:**

**Herstellung von Mikrogelhaltigen duroplastischen Zusammensetzungen mit dem System RC-PUR KE 9686 und RC-DUR 302**

Im diesem Beispiel wird beschrieben, welche rheologischen Eigenschaften die dargestellten Pasten haben, wie mikrogelhaltige Pasten mit der Härterkomponente zu einem Duromer maschinell umgesetzt werden und welche mechanische Eigenschaften an den resultierenden Duromeren gemessen wurden.

Bei RC-PUR KE 9686 handelt es sich um ein Handelsprodukt (A-Komponente) der Rheinchemie Rheinau GmbH zur Herstellung von Polyurethanen und bei RC-DUR 302 um die dazugehörige B-Komponente, ein aliphatisches Isocyanat, welches ebenfalls ein Handelsprodukt der Rheinchemie Rheinau GmbH ist. Die Viskosität von RC-PUR KE 9686 beträgt bei 20°C 2,600 Pas (Technisches Datenblatt RC-PUR KE 9686: Version 1/2000)

**a) Rheologle der Mikrogelhaltigen RC-PUR KE 9686-Pasten**

In der Tabelle 5 sind die Viskositäten der mikrogelhaltigen Pasten (OBR 1209, OBR 1212, OBR 1225) bei verschiedenen Scherraten und einer Temperatur von 20°C wiedergegeben.

Tab. 5. RC-PUR KE 9686-X, Viskositäten der mikrogelhaltigen Pasten bei verschiedenen Scherraten; 20°C.

| Mikrogel | Konzentration des Mikrogels | Dispergierung | Viskosität bei Scherrate $\gamma=5\ s^{-1}$ | Viskosität bei Scherrate $\gamma=100\ s^{-1}$ | Viskosität bei Scherrate $\gamma=1000\ s^{-1}$ | Viskosität bei Scherrate $\gamma=0,1\ s^{-1}$ | Quotient$\eta$ $(0,1\,sec^{-1})$ / $\eta$ (1000 $sec^{-1}$) |
|---|---|---|---|---|---|---|---|
| | [%] | | [mPas] | [mPas] | [mPas] | [mPas] | [-] |
| OBR1209 | 2,5 | 4x950 | 3,4 | 3,0 | 2,6 | 2,8 | 1,1 |
| OBR1209 | 14 | 4x950 | 8,8 | 6,4 | 5,0 | 7,9 | 1,6 |
| OBR1212 | 2,5 | 4x950 | 3,7 | 3,1 | 2,6 | 2,8 | 1,1 |
| OBR1225 | 2,5 | 4x950 | 3,7 | 3,2 | 2,7 | 4,2 | 1,6 |
| OBR1225 | 13 | 4x950 | 16,8 | 8,7 | 5,8 | 24 | 4,1 |

Aus den Werten in der Tabelle 5 ist ersichtlich, dass insbesondere die Mikrogele OBR 1 209, OBR 1212 und Insbesondere OBR 1225 die Viskosität mit zunehmender Mikrogelkonzentration bei verschiedenen Scherraten erhöhen Im Vergleich zu den zuvor beschriebenen Mikrogelen ist der Viskositätsanstieg durch diese Mikrogele geringer, so dass diese insbesondere für Anwendungen Interessant sind, bei welchen hohe Mikrogelkonzentrationen gewünscht sind, um z. B. die mechanischen Eigenschaften stark zu beeinflussen, während die Verarbeltbarkelf weiterhin gut ist.

b) Abmischung der Mikrogelhaltigen Duromervorstufen-Pasten mit RC-DUR 302

Die Mikrogelhaltigen Polyolpasten wurden wie in Tabelle 6 beschrieben mit RC-DUR 302 (Isocyanat (Iso)) mit einer 2-K-Niederdruckmaschine dosiert, gemischt und in Formen abgegossen.
T-Paste stellt dabei ein Produkt der Firma UOP zur Reduktlon des Wassergehalts der.

Tab. 6. RC-PUR KE 9686-X, Abgießbedingungen bei der Maschinenverarbeitung

| Probenname | Zusammen-Setzung | Dauer entgasen | Zahnräder | | Mischungs-Verhältnis | | Temperatur der Form (°C) | Materialtemperatur (°C) | |
|---|---|---|---|---|---|---|---|---|---|
| | | | Polyol | Iso | Real | Ideal | | Polyol | Iso |
| RC-PUR KE 9686 | 0% | 2h 30 min bei 60°C | 22:26 | | 100:173 | 100:173 | 75 | 60 / 60 | |
| RC-PUR KE 9686-2 | 14% OBR 1212 | 2h bei 60°C | 20:28 | | 100:153 | 100:149 | 70/90 | 60/60 | |
| RC-PUR KE 9686-6 | 14% OBR 1225 | 2h bei 60°C | 20:28 | | 100:153 | 100:150 | 70 | 60 / 50 | |
| RC-PUR KE 9686-11 | 14% OBR 1135 + 6% T-Paste | Über Nacht bei 60°C | 20:28 | | 100:154 | 100:149 | 70 | 60 / 60 | |
| RC-PUR KE 9686-16 | 14% OBR 1209 | 2h bei 60°C | 20:28 | | 100:154 | 100:149 | 70 | 60/60 | |

**c) Herstellung der Probekörper**

Aus den, wie unter b) beschrieben, gegossenen Formen werden die Prüfkörper für den Zugversuch ausgestanzt, sowie die Prüfkörper für die Shore-Härte-Messungen ausgeschnitten. Die Prüfkörper müssen glatte Kanten haben und frei von Kerben und Lufteinschlüssen sein.

**d) Härte nach Shore D**

In der Tabelle 7 sind die Ergebnisse der Shore D-Härtemessungen aufgeführt.

Tab. 7. RC-PUR KE 9686-X, Härte nach Shore D des Polyurethans, hergestellt aus mikrogelhaltigem RC-PUR KE 9686 und RC-DUR 302.

| Probenname | Zusammensetzung | Shore D |
|---|---|---|
| RC-PURKE9686 | 0% | 82 |
| RC-PUR KE 9686-2 | 14% OBR 1212 | 81 |
| RC-PUR KE 9686-6 | 14% OBR 1225 | 80 |
| RC-PUR KE 9686-11 | 14% OBR 1 135 | 83 |
| RC-PUR KE 9686-16 | 14% OBR 1209 | 80 |

Es zeigt sich, dass die Zugabe von bis zu 14 Gew.-% Mikrogel zu RC-PUR KE 9686 keinen großen Einfluss auf die Shore-Härte des resultierenden PU's hat.

Alle gemessenen Werte liegen im selben Bereich (80-83 Shore D), d. h. obwohl die Bruchdehnung durch den Zusatz von Mikrogelen stark erhöht wird, was unten noch gezeigt wird, ist es möglich, die hohen Shore-Härten beizubehalten (Tab. 8).

**e) Zugversuch am System RC-PUR KE 9686 und RC-DUR 302**

In der Tabelle 8 sind die Ergebnisse der Zug-Dehnungs-Versuche aufgeführt, die an den Probekörpern gemessen worden sind; diese Probekörper sind die gemäß den Abschnitten b) und c) hergestellt worden.

Tab. 8. RC-PUR KE 9686-X, Zugversuch (Prüfgeschwindigkeit 12,5 mm/min, 23°C)

| Probenname | Zusammensetzung | $\varepsilon_{Bruch}$ |
|---|---|---|
| | | [%] |
| RC-PUR KE 9686 | 0% | 10,7 |
| RC-PUR KE 9686-2 | 14% OBR 1212 | 18,1 |
| RC-PUR KE 9686-6 | 14% OBR 1225 | 16,4 |
| RC-PUR KE 9686-11 | 14% OBR 1135 | 31,6 |
| RC-PUR KE 9686-16 | 14% OBR 1209 | 18,1 |

Aus Tabelle 8 ist ersichtlich, dass im Vergleich zum Mikrogelfreien RC-PUR KE 9686 durch Zugabe von Mikrogel die Bruchdehnung $\varepsilon_{Bruch}$ zunimmt.

**f) Charpy-Schlagzählgkeit am Mikrogelhaltigen System RC-PUR KE 9686 und RC-DUR 302**

Als Prüfkörper wurden Stäbe gemäß DIN 53453 verwendet.

Tab. 9. RC-PUR KE 9686-X, Charpy-Schlagzähigkeit nach DIN EN ISO 1 79 bei 23°C

| Material | Schlagzähigkeit | Standardabweichung | Varianz | MG-Gehalt | Mikrogel |
|---|---|---|---|---|---|
| | [kJ/m$^2$] | [kJ/m$^2$] | [%] | [%] | |

(fortgesetzt)

| Material | Schlagzähigkeit | Standardabweichung | Varianz | MG-Gehalt | Mikrogel |
|----------|-----------------|--------------------|---------|-----------|----------|
| 9686-0 | 51 | 21 | 42 | 0 | - |
| 9686-2 | 93 | 19 | 20 | 14 | OBR 1212 |
| 9686-6 | 38 | 12 | 33 | 14 | OBR 1225 |
| 9686-16 | 73 | 9 | 12 | 14 | OBR 1209 |

Aus Tabelle 9 wird deutlich, dass durch den Zusatz von nur 5 Gew.-% Mikrogel (OBR 1 209, OBR 1212) (bezogen auf PU) die Schlagzähigkeit deutlich gesteigert werden kann; mit OBR 1225 ist dies nicht gelungen.

**Beispiel 4:**

**Herstellung von duroplastischen Zusammensetzungen mit dem** mikro**gelhaltigen Epilox Verdünner P13-26 und Epilox Härter IPD**

Im diesem Beispiel wird beschrieben, wie eine mikrogelfreie und eine mikrogelhaltige Epoxidharzpaste mit der Härterkomponente zu Duromeren umgesetzt wurden und welche mechanische Eigenschaften an den resultierenden Duromeren gemessen worden sind.

Bei Epilox Verdünner P 13-26, ein Diglycidylether auf Basis Cyclohexandimethanol, handelt es sich um ein Handelsprodukt der Leuna-Harze GmbH zur Herstellung von Epoxidharzen (EP) und bei Epilox Härter IPD um ein cycloaliphatisches Polyamin, welches ebenfalls ein Handelsprodukt der Leuna-Harze GmbH ist. Disperbyk 2070, ein Dispergierhilfsmittel, und Byk A 530, ein Entlüfter, sind Handelsprodukte der Byk-Chemie GmbH. OBR 980 ist ein Laborprodukt der Rheinchemie Rheinau GmbH/Lanxess; dieses ist bei den Herstellungsbeispielen beschrieben.

Die mikrogelfreie und die mikrogelhaltige Epoxidharzpaste wurden in äquimolarer Abmischung mit der Härterkomponente, Epilox Härter IPD, zu Duromeren umgesetzt. Der Abguß erfolgte manuell,

Die Shore-D-Härte der mikrogelfreien und der 20 prozentigen OBR 980 haltigen EP-Abmischung sind in der folgenden Tabelle 10 angegeben.

Tab, 10, Shore-D-Härte des Mikrogelfreien und des mikrogelhaltigen Epoxidharzes (EP) auf Basis von Epilox Verdünner P13-26 und Epilox IPD.

| Bezeichnung | Mikrogelgehalt [%] | Shore-Härte D |
|-------------|--------------------|--------------|
| Epilox P13-26-III | 0 | 82 |
| Epilox P13-26-I V[1] | 19,7 (OBR 980) | 72 |
| **1) mit 3% Disperbyk 2070 und 0,2 % Byk A 530 (bezogen auf die Gesamtrezeptur)** | | |

Das Material mit 20 Gew-% OBR 980 hat eine niedrigere Härte als das Material ohne Mikrogel, was analog zum Zug-Dehnungs-Versuch auf ein Mikrogelnetzwerk im EP-Material schließen lässt (Tab. 11).

Tab. 11. Zugversuch an den Umsetzungsprodukten aus Epilox Verdünner P 13-26 ohne bzw. mit OBR 980 und Epilox Härter IPD; 23°C.

| Bezeichnung | Mikrogelgehalt [%] | Bruchdehnung $\Box$B [%] |
|-------------|--------------------|--------------------------|
| Epilox P13-26-III | 0 | 7,6 |
| Epilox P13-26-I V1) | 19,7 (OBR 980) | 40 |
| 1) mit 3% Disperbyk 2070 und 0,2 % Byk A 530 (bezogen auf die Gesamtrezeptur) | | |

Für 20 Gew.-% OBR 980 wird ein starker Anstieg der Bruchdehnung beobachtet. Im Vergleich zum mikrogelfreien EP ist die Bruchdehnung um mehr als 500% erhöht.

**Beispiel 5:**

**Charakterisierung verschiedener Mikrogelpasten auf Basis Polyol,** Poly**isocyanat oder Epoxyharz hinsichtlich ihrer rheologischen** Eigenschaften

In der Tabelle 12 sind die Viskositäten der mikrogelhaltigen Pasten (OBR 1009, OBR 1155, RFL 403A) bei verschiedenen Scherraten und einer Temperatur von 20°C wiedergegeben.

Bei Desmodur PA09, eine Zubereitung auf Basis Diphenylmethandiisocyanat (MDI), handelt es sich um ein Handelsprodukt von Bayer MaterialScience; die Viskosität nach DIN 53019 beträgt bei 25°C ca. 500 mPas (Sicherheitsdatenblatt 045598/14), Epilox T19-36/1000, ein reaktivverdünntes Epoxidharz, ist ein Handelsprodukt der Leuna-Harze GmbH; die Viskosität nach DIN 53015 beträgt bei 25°C 1150 mPas (Datenblatt T19-36, Dez-00), Epilox P 13-20, ein Hexandioldiglycidylether, ist ein Handelsprodukt der Leuna-Harze GmbH; die Viskosität nach DIN 53015 beträgt bei 25°C 20 mPas (Datenblatt P13-20, Mrz-01).

Die mikrogelhaltigen Vorstufen wurden im Homogenisator bei den angegebenen Drücken dispergiert.

Tab. 12. Viskositäten der mikrogelhaltigen Pasten auf Basis Desmodur PA09, Epilox T19-36/1000 und Epilox P 13-20 bei verschiedenen Scherraten; 20°C.

| Bezeichnung | Charakteristika | Viskosität $\eta$ bei $\nu=5\,sec^{-1}$ (20°C) | Viskosität $\eta$ $\nu=100\,sec^{-1}$ (20°C) | Viskosität $\eta$ $\nu=1000\,sec^{-1}$ (20°C) | Viskosität $\eta$ $\nu=0,1\,sec^{-1}$ (20°C) | Quotient $\eta$ $(0,1\,sec^{-1})/\eta$ $(1000\,sec^{-1})$ |
|---|---|---|---|---|---|---|
| | | [mPas] | [mPas] | [mPas] | [mPas] | ☐ |
| Desmodur PA09 - OBR 1155 | 10% OBR 1155 4x970bar | 16500 | 11500 | 9640 | 17000 | 1,8 |
| | | | | | | |
| T19-36 2 | T19-36 (0%) 2x960bar | 2800 | 2790 | 2730 | 1780 | 0,7 |
| T19-36 8 | T19-36 OBR1009 (10,7%) 2x910bar | 78200 | 20400 | 10300 | 581000 | 56 |
| | | | | | | |
| Epilox-P13-20 | 60% RFL 403A 2x900bar | 297000 | 28200 | 4200 | 857000 | 204 |

Aus den Werten der Tabelle 12 ist ersichtlich, dass durch den Zusatz von Mikrogelen die Rheologie weit stärker beeinflusst wird, als dies nach der Einstein'schen Viskositätsgleichung zu erwarten wäre (M. Mooney, The viscosity of a concentrated suspension of spherical particles, J, Colloid, Sci, 6 (1951) 162).

Es kann gezeigt werden, dass Mikrogele auch in Polyisocyanaten und in Epoxidharzen eine starke verdickende Wirkung haben; sie sind als rheologische Additive geeignet.

Überraschenderweise ist es gelungen, sogar 60 Gew.-% RFL 403A in Epilox P 13-20 einzuarbeiten; bei hoher Scherung weist diese feste Paste, die bei einer Scherrate $\nu$ von 5 s$^{-1}$ eine Viskosität von 297 000 mPas besitzt, nur noch eine Viskosität von 4200 mPas ($\nu$ = 1000 s$^{-1}$) auf.

**Patentansprüche**

1. Duroplastische Zusammensetzung, enthaltend mindestens einen duroplastischen Kunststoff (A) und mindestens ein vernetztes Mikrogel (B), dessen durchschnittlicher Teilchendurchmesser der Primärpartikel von 5 bis 500 nm beträgt, **dadurch gekennzeichnet, dass** das Mikrogel (B) funktionelle Gruppen aufweist, wobei die funktionellen Gruppen aus der Gruppe ausgewählt sind, die aus einer Hydroxyl-, Epoxy-, Amin-, Isocyanat- und einer ungesättigten Gruppe besteht, und der duroplastische Kunststoff (A) ausgewählt ist aus der Gruppe, die besteht aus:

- Diallylphthalat-Harzen (PDAP),

- Epoxidharzen (EP),
- Aminoplasten,
- Phenoplasten,
- Furfurylalkohol-Formaldehyd-Harzen (FF),
- Ungesättigten Polyesterharzen (UP),
- Polyurethan-Harzen (PU),
- Reaktionsspritzgegossenen Polyurethan-Harzen (RIM-PU),
- Furanharzen,
- Vinylesterharzen (VE, VU),
- Polyester-Melamin-Harzen, und
- Gemischen von Diallylphthalat- (PDAP) oder Diallyl-isophthalat (PDAIP)-Harzen.

2. Duroplastische Zusammensetzung, enthaltend mindestens einen duroplastischen Kunststoff (A) und mindestens ein nicht durch energiereiche Strahlung vernetztes Mikrogel (B) auf der Basis von Homopolymeren oder statistischen Copolymeren, **dadurch gekennzeichnet, dass** das Mikrogel (B) funktionelle Gruppen aufweist, wobei die funktionellen Gruppen aus der Gruppe ausgewählt sind, die aus einer Hydroxyl-, Epoxy-, Amin-, Isocyanat- und einer ungesättigten Gruppe besteht, und der duroplastische Kunststoff (A) ausgewählt ist aus der Gruppe, die besteht aus

- Diallylphthalat-Harzen (PDAP),
- Epoxidharzen (EP),
- Aminoplasten,
- Melamin-Formaldehyd-Harzen (MF),
- Phenoplasten,
- Furfurylalkohol-Formaldehyd-Harzen (FF),
- Ungesättigten Polyesterharzen (UP),
- Polyurethan-Harzen (PU),
- Reaktionsspritzgegossenen Polyurethan-Harzen (RIM-PU),
- Furanharzen,
- Vinylesterharzen (VE, VU),
- Polyester-Melamin-Harzen, und
- Gemischen von Diallylphthalat- (PDAP) oder Diallyl-isophthalat (PDAIP)-Harzen.

3. Duroplastische Zusammensetzung nach Anspruch 1 oder 2, **dadurch gekennzeichnet, dass** der duroplastische Kunststoff (A) ausgewählt wird aus der Gruppe die besteht aus Epoxidharzen, Aminoplastharzen, Phenoplasten, ungesättigten Polyesterharzen und reaktionsspritzgegossenen Polyurethan-Harzen.

4. Duroplastische Zusammensetzung nach einem der Ansprüche 1 bis 3, **dadurch gekennzeichnet, dass** die Primärpartikel des Mikrogels (B) eine annähernd kugelförmige Geometrie aufweisen.

5. Duroplastische Zusammensetzung nach einem der Ansprüche 1 bis 4, **dadurch gekennzeichnet, dass** die Abweichung der Durchmesser eines einzelnen Primärpartikels des Mikrogels (B), definiert als

$$[ (d1 - d2) / d2] \times 100,$$

worin d1 und d2 zwei beliebige Durchmesser eines beliebigen Schnittes des Primärpartikels sind und d1 > d2 ist, weniger als 250 % beträgt.

6. Duroplastische Zusammensetzung nach einem der Ansprüche 1 bis 5, **dadurch gekennzeichnet, dass** die Mikrogele (B) in Toluol bei 23°C unlösliche Anteile von mindestens 70 Gew.-% aufweisen.

7. Duroplastische Zusammensetzung nach einem der Ansprüche 1 bis 6, **dadurch gekennzeichnet, dass** die Mikrogele (B) in Toluol bei 23°C einen Quellungsindex von weniger als 80 aufweisen.

8. Duroplastische Zusammensetzung nach einem der Ansprüche 1 bis 7, **dadurch gekennzeichnet, dass** die Mikrogele (B) Glastemperaturen von -100°C bis + 120°C aufweisen,

9. Duroplastische Zusammensetzung nach einem der Ansprüche 1 bis 8, **dadurch gekennzeichnet, dass** die Mikrogele (B) eine Breite des Glasübergangsbereichs von größer als 5 °C aufweisen.

10. Duroplastische Zusammensetzung nach einem der Ansprüche 1 bis 9, **dadurch gekennzeichnet, dass** die Mikrogele (B) durch Emulsionspolymerisation erhältlich sind.

11. Duroplastische Zusammensetzung nach einem der Ansprüche 1 bis 10, **dadurch gekennzeichnet, dass** sie ein Schubmodul von mehr als 10 MPa in einem Temperaturbereich von -150 bis +200°C aufweist.

12. Duroplastische Zusammensetzung nach einem der Ansprüche 1 bis 1 1 , **dadurch gekennzeichnet, dass** das Gewichtsverhältnis duroplastischer Kunststoff (A) / Mikrogel (B) von 0,5 : 99,5 bis 99,5 1 0,5 beträgt.

13. Duroplastische Zusammensetzung nach einem der Ansprüche 1 bis 12, **dadurch gekennzeichnet, dass** das Gewichtsverhältnis duroplastischer Kunststoff (A) / Mikrogel (B) von 10 : 90 bis 90 : 10 beträgt,

14. Duroplastische Zusammensetzung nach einem der Ansprüche 1 bis 13, enthaltend ein oder mehrere Kunststoffadditiv(e).

15. Duroplastische Zusammensetzung nach Anspruch 14, worin das Additiv ausgewählt ist aus der Gruppe, die besteht aus: Füll- und Verstärkungsstoffen, Pigmenten, UV-Absorbern, Flammschutzmitteln, Entschäumern, Entlüftern, Benetzungs- und Dispergierhilfsmitteln, Fasern, Geweben, Katalysatoren, Verdickungsmitteln, Anti-Absetzmitteln, Anti-Schrumpfadditiven, Thixotropierungsmitteln, Trennmitteln, Verlaufsmitteln, Mattierungsmitteln, Korrosionsinhibitoren, Slip-Additiven, Bioziden.

16. Duroplastische Zusammensetzung, enthaltend mindestens einen duroplastischen Kunststoff (A), der aus Polyurethanharzen ausgewählt ist, und mindestens ein vernetztes Mikrogel (B), dessen durchschnittlicher Teilchendurchmesser der Primärpartikel von 5 bis 500 nm beträgt.

17. Duroplastische Zusammensetzung, enthaltend mindestens einen duroplastischen Kunststoff (A), der aus Polyurethanharzen ausgewählt ist, und mindestens ein nicht durch energiereiche Strahlung vernetztes Mikrogel (B) auf der Basis von Homopolymeren oder statistischen Copolymeren.

18. Verwendung von vernetzten Mikrogelen (B) mit einem durchschnittlichen Teilchendurchmesser der Primärpartikel von 5 bis 500 nm, **dadurch gekennzeichnet, dass** das Mikrogel (B) funktionelle Gruppen aufweist, wobei die funktionellen Gruppen aus der Gruppe ausgewählt sind, die aus einer Hydroxyl-, Epoxy-, Amin-, Isocyanat- und einer ungesättigten Gruppe besteht, zur Herstellung von duroplastischen Zusammensetzungen, welche mindestens einen duroplastischen Kunststoff (A) enthalten, der ausgewählt ist aus der Gruppe, die besteht aus:

   - Diallylphthalat-Harzen (PDAP),
   - Epoxidharzen (EP),
   - Aminoplasten,
   - Phenoplasten,
   - Ungesättigten Polyesterharzen (UP),
   - Polyurethan-Harzen (PU),
   - Reaktionsspritzgegossenen Polyurethan-Harzen (RIM-PU)
   - Furanharzen,
   - Vinylesterharzen (VE, VU),
   - Polyester-Melamin-Harzen, und
   - Gemischen von Diallylphthalat- (PDAP) oder Diallyl-isophthalat (PDAIP)-Harzen.

19. Verfahren zur Herstellung der duroplastischen Zusammensetzung nach einem der Ansprüche 1 bis 17, das die folgenden Schritte umfasst:

   a) Dispergieren des Mikrogels (B) mit einem durchschnittlichen Teilchendurchmesser der Primärpartikel von 5 bis 500 nm in einem oder mehreren zur Bildung des duroplastischen Kunststoffes (A) befähigten Ausgangsprodukt(en) oder einer Lösung davon, welche ggf. Kunststoffadditive enthalten, die vorteilhaft vor der Dispergierung zugesetzt werden,
   b) Gegebenenfalls Zusatz weiterer Komponenten und

c) Härten oder Vernetzen der erhaltenen Dispersion.

20. Verfahren nach Anspruch 19, worin der Schritt c) unter gleichzeitiger Formgebung erfolgt.

21. Verfahren nach Anspruch 19 oder 20, worin das zur Bildung des duroplastischen Kunststoffes (A) befähigte Ausgangsprodukt aus Monomeren, Oligomeren (Präpolymeren) oder Härtern oder Vernetzungsmitteln dafür ausgewählt wird.

22. Verfahren nach einem der Ansprüche 19 bis 21, **dadurch gekennzeichnet, dass** das zur Bildung des duroplastischen Kunststoffes (A) befähigte Ausgangsprodukt aus der Gruppe ausgewählt wird, die besteht aus:

- Polyolen und Mischungen davon,
- aliphatischen Polyetherpolyolen und Mischungen davon,
- aliphatischen Polyesterpolyolen und Mischungen davon,
- aromatischen Polyesterpolyolen und Mischungen davon,
- Polyetherpolyesterpolyolen und Mischungen davon,
- ungestättigten Polyestern und Mischungen davon,
- aromatischen Alkoholen oder Mischungen davon,
- Styrol,
- Polyisocyanaten,
- Isocyanatharzen,
- Epoxidharzen,
- Phenolharzen,
- Furanharzen,
- Caprolactam,
- Dicyclopentadien,
- Aliphatischen Polyaminen,
- Polyamidoaminen,
- Aromatischen Polyaminen,
- (Meth)acrylaten,
- Polyallyl-Verbindungen,
- Vinylestern,
- Polykondensations-Duroplasten im A-Zustand sowie
- Derivaten oder Lösungen der vorstehend genannten Ausgangsprodukte,

23. Verfahren nach einem der Ansprüche 19 bis 22, worin das Mikrogel (B) und das zur Bildung des duroplastischen Kunststoffes befähigte Ausgangsprodukt gemeinsam der Behandlung mittels eines Homogenisators, einer Kugelmühle, einer Perlmühle, eines Walzenstuhls, einer Dreiwalze, einer Ein- oder Mehrwellen-Extruderschnecke, eines Kneters und/ oder eines Dissolvers unterworfen werden.

24. Verfahren nach Anspruch 23, worin das Mikrogel (B) und das zur Bildung des duroplastischen Kunststoffes befähigte Ausgangsprodukt gemeinsam der Behandlung mittels eines Homogenisators unterworfen werden.

25. Duroplastische Zusammensetzungen, erhältlich nach den Verfahren nach einem der Ansprüche 19 bis 24.

26. Duroplastische Zusammensetzung, erhältlich durch Härten oder Vernetzen einer Dispersion, enthaltend mindestens ein zur Bildung eines duroplastischen Kunststoffes, ausgewählt aus der Gruppe, die besteht aus:

- Diallylphthalat-Harzen (PDAP),
- Epoxidharzen (EP),
- Aminoplasten,
- Phenoplasten,
- Furfurylalkohol-Formaldehyd-Harzen (FF),
- Ungesättigten Polyesterharzen (UP),
- Polyurethan-Harzen (PU),
- Reaktionsspritzgegossenen Polyurethan-Harzen (RIM-PU),
- Furanharzen,
- Vinylesterharzen (VE, VU),

- Polyester-Melamin-Harzen, und
- Gemischen von Diallylphthalat- (PDAP) oder Diallyl-isophthalat (PDAIP)-Harzen,

befähigtes Ausgangsprodukt und mindestens ein vernetztes Mikrogel (B), dessen durchschnittlicher Teilchendurchmesser der Primärpartikel von 5 bis 500 nm beträgt, wobei der durchschnittliche Teilchendurchmesser der Primärpartikel mittels Ultrazentrifugation an der Dispersion nach DIN 53206 bestimmt wird, und das funktionelle Gruppen aufweist, wobei die funktionellen Gruppen aus der Gruppe ausgewählt sind, die aus einer Hydroxyl-, Epoxy-, Amin-, isocyanat- und einer ungesättigten Gruppe besteht.

27. Duroplastische Zusammensetzung nach Anspruch 26, worin die genannte Dispersion durch Behandlung der Dispersion mittels eines Homogenisators, einer Kugelmühle, einer Perlmühle, eines Walzenstuhls, einer Dreiwalze, einer Ein- oder Mehrwellen-Extruderschnecke, eines Kneters und/ oder eines Dissolvers erhalten wird.

28. Verwendung der duroplastischen Zusammensetzungen nach einem der Ansprüche 1 bis 1 7, 26 und 27 oder der duroplastischen Zusammensetzungen erhältlich nach den Verfahren nach einem der Ansprüche 19 bis 24 als Formkörper, als Beschichtung oder Verbindungsmaterial.

29. Verwendung der duroplastischen Zusammensetzungen nach einem der Ansprüche 1 bis 17, 26 und 27 oder der duroplastischen Zusammensetzungen erhältlich nach den Verfahren nach einem der Ansprüche 19 bis 24 in elektronischen Bauteilen, in Konstruktionsbauteilen,

30. Verwendung von Mikrogelen, deren durchschnittlicher Teilchendurchmesser der Primärpartikel von 5 bis 500 nm beträgt, und die funktionelle Gruppen aufweisen, wobei die funktionellen Gruppen aus der Gruppe ausgewählt sind, die aus einer Hydroxyl-, Epoxy-, Amin-, Isocyanat- und einer ungesättigten Gruppe besteht, als rheologisches Additiv in einem oder mehreren zur Bildung eines duroplastischen Kunststoffes (A), ausgewählt aus der Gruppe, die besteht aus:

- Diallylphthalat-Harzen (PDAP),
- Epoxidharzen (EP),
- Aminoplasten,
- Phenoplasten,
- Furfurylalkohol-Formaldehyd-Harzen (FF),
- Ungesättigten Polyesterharzen (UP),
- Polyurethan-Harzen (PU),
- Reaktionsspritzgegossenen Polyurethan-Harzen (RIM-PU),
- Furanharzen,
- Vinylesterharzen (VE, VU),
- Polyester-Melamin-Harzen, und
- Gemischen von Diallylphthalat- (PDAP) oder Diallyl-isophthalat (PDAIP)-Harzen,

befähigten Ausgangsprodukt(en) oder einer Lösung davon, welche(s) Reaktanden der mittleren Funktionalität je Molekül von typischerweise ≥ 3 enthält bzw, enthalten.

31. Verwendung gemäß Anspruch 30, wobei das rheologische Additiv ein Verdicker und/oder Thixotropiermittel ist.

32. Zusammensetzungen, die ein oder mehrere vernetzte Mikrogel(e) (B), deren durchschnittlicher Teilchendurchmesser der Primärpartikel von 5 bis 500 nm beträgt, und die funktionelle Gruppen aufweisen, wobei die funktionellen Gruppen aus der Gruppe ausgewählt sind, die aus einer Hydroxyl-, Epoxy-, Amin-, Isocyanat- und einer ungesättigten Gruppe besteht, und ein oder mehrere zur Bildung eines duroplastischen Kunststoffes (A), ausgewählt aus der Gruppe, die besteht aus:

- Diallylphthalat-Harzen (PDAP),
- Epoxidharzen (EP),
- Aminoplasten,
- Phenoplasten,
- Furfurylalkohol-Formaldehyd-Harzen (FF),
- Ungesättigten Polyesterharzen (UP),
- Polyurethan-Harzen (PU),

- Reaktionsspritzgegossenen Polyurethan-Harzen (RIM-PU),
- Furanharzen,
- Vinylesterharzen (VE, VU),
- Polyester-Melamin-Harzen, und
- Gemischen von Diallylphthalat- (PDAP) oder Diallyl-isophthalat (PDAIP)-Harzen,

befähigte(s) Ausgangsprodukt(e) enthalten, worin das Ausgangsprodukt oder die Ausgangsprodukte mindestens zu 20 Gew.-% aus vernetzbaren Komponenten mit einer mittleren Funktionalität von ≥ 3 besteht bzw. bestehen.

**Claims**

1. Thermosetting plastics composition comprising at least one thermosetting plastics material (A) and at least one crosslinked microgel (B) whose average particle diameter of the primary particles is from 5 to 500 nm, **characterised in that** the microgel (B) contains functional groups, wherein the functional groups are selected from the group consisting of a hydroxyl group, an epoxy group, an amine group, an isocyanate group and an unsaturated group, and the thermosetting plastics material (A) is selected from the group consisting of:

   - diallyl phthalate resins (PDAP),
   - epoxy resins (EP),
   - aminoplastics,
   - phenoplastics,
   - furfuryl alcohol-formaldehyde resins (FF),
   - unsaturated polyester resins (UP),
   - polyurethane resins (PU),
   - reaction injection moulded polyurethane resins (RIM-PU),
   - furan resins,
   - vinyl ester resins (VE, VU),
   - polyester-melamine resins, and
   - mixtures of diallyl phthalate (PDAP) or diallyl isophthalate (PDAIP) resins.

2. Thermosetting plastics composition comprising at least one thermosetting plastics material (A) and at least one microgel (B) based on homopolymers or random copolymers that has not been crosslinked by high-energy radiation, **characterised in that** the microgel (B) contains functional groups, wherein the functional groups are selected from the group consisting of a hydroxyl group, an epoxy group, an amine group, an isocyanate group and an unsaturated group, and the thermosetting plastics material (A) is selected from the group consisting of:

   - diallyl phthalate resins (PDAP),
   - epoxy resins (EP),
   - aminoplastics,
   - melamine-formaldehyde resins (MF),
   - phenoplastics,
   - furfuryl alcohol-formaldehyde resins (FF),
   - unsaturated polyester resins (UP),
   - polyurethane resins (PU),
   - reaction injection moulded polyurethane resins (RIM-PU),
   - furan resins,
   - vinyl ester resins (VE, VU),
   - polyester-melamine resins, and
   - mixtures of diallyl phthalate (PDAP) or diallyl isophthalate (PDAIP) resins.

3. Thermosetting plastics composition according to claim 1 or 2, **characterised in that** the thermosetting plastics material (A) is selected from the group consisting of epoxy resins, aminoplastic resins, phenoplastics, unsaturated polyester resins and reaction injection moulded polyurethane resins.

4. Thermosetting plastics composition according to any one of claims 1 to 3, **characterised in that** the primary particles of the microgel (B) have an approximately spherical geometry.

5. Thermosetting plastics composition according to any one of claims 1 to 4, **characterised in that** the difference in the diameters of an individual primary particle of the microgel (B), defined as

$$[(d1 - d2) / d2] x 100,$$

wherein d1 and d2 are two arbitrary diameters of an arbitrary section of the primary particle and d1 > d2, is less than 250%.

6. Thermosetting plastics composition according to any one of claims 1 to 5, **characterised in that** the microgels (B) contain portions that are insoluble in toluene at 23°C of at least 70 wt.%.

7. Thermosetting plastics composition according to any one of claims 1 to 6, **characterised in that** the microgels (B) have a swelling index in toluene at 23°C of less than 80.

8. Thermosetting plastics composition according to any one of claims 1 to 7, **characterised in that** the microgels (B) have glass transition temperatures of from -100°C to +120°C.

9. Thermosetting plastics composition according to any one of claims 1 to 8, **characterised in that** the microgels (B) have a breadth of the glass transition range of greater than 5°C.

10. Thermosetting plastics composition according to any one of claims 1 to 9, **characterised in that** the microgels (B) are obtainable by emulsion polymerisation.

11. Thermosetting plastics composition according to any one of claims 1 to 10, **characterised in that** it has a shear modulus of more than 10 MPa in a temperature range from -150 to +200°C.

12. Thermosetting plastics composition according to any one of claims 1 to 11, **characterised in that** the weight ratio of thermosetting plastics material (A) / microgel (B) is from 0.5 : 99.5 to 99.5 : 0.5.

13. Thermosetting plastics composition according to any one of claims 1 to 12, **characterised in that** the weight ratio of thermosetting plastics material (A) / microgel (B) is from 10 : 90 to 90 : 10.

14. Thermosetting plastics composition according to any one of claims 1 to 13 comprising one or more plastics additives.

15. Thermosetting plastics composition according to claim 14, wherein the additive is selected from the group consisting of: filling and reinforcing materials, pigments, UV absorbers, flameproofing agents, antifoams, deaerators, wetting and dispersing aids, fibres, woven fabrics, catalysts, thickening agents, anti-settling agents, anti-shrinking additives, thixotropic agents, release agents, flow improvers, mattifying agents, corrosion inhibitors, slip additives, biocides.

16. Thermosetting plastics composition comprising at least one thermosetting plastics material (A) selected from polyurethane resins, and at least one crosslinked microgel (B) whose average particle diameter of the primary particles is from 5 to 500 nm.

17. Thermosetting plastics composition comprising at least one thermosetting plastics material (A) selected from polyurethane resins, and at least one microgel (B) based on homopolymers or random copolymers that has not been crosslinked by high-energy radiation.

18. Use of crosslinked microgels (B) having an average particle diameter of the primary particles of from 5 to 500 nm, **characterised in that** the microgel (B) contains functional groups, wherein the functional groups are selected from the group consisting of a hydroxyl group, an epoxy group, an amine group, an isocyanate group and an unsaturated group, in the preparation of thermosetting plastics compositions comprising at least one thermosetting plastics material (A) selected from the group consisting of:

    - diallyl phthalate resins (PDAP),
    - epoxy resins (EP),
    - aminoplastics,

- phenoplastics,
- unsaturated polyester resins (UP),
- polyurethane resins (PU),
- reaction injection moulded polyurethane resins (RIM-PU),
- furan resins,
- vinyl ester resins (VE, VU),
- polyester-melamine resins, and
- mixtures of diallyl phthalate (PDAP) or diallyl isophthalate (PDAIP) resins.

19. Process for the preparation of the thermosetting plastics composition according to any one of claims 1 to 17, which process comprises the following steps:

a) dispersion of the microgel (B) having an average particle diameter of the primary particles of from 5 to 500 nm in one or more starting products capable of forming the thermosetting plastics material (A), or a solution thereof, which optionally contain plastics additives, which are advantageously added before the dispersion,
b) optional addition of further components and
c) curing or crosslinking of the resulting dispersion.

20. Process according to claim 19, wherein step c) is carried out with simultaneous shaping.

21. Process according to claim 19 or 20, wherein the starting product capable of forming the thermosetting plastics material (A) is selected from monomers, oligomers (prepolymers) or curing agents or crosslinkers therefor.

22. Process according to any one of claims 19 to 21, **characterised in that** the starting product capable of forming the thermosetting plastics material (A) is selected from the group consisting of:

- polyols and mixtures thereof,
- aliphatic polyether polyols and mixtures thereof,
- aliphatic polyester polyols and mixtures thereof,
- aromatic polyester polyols and mixtures thereof,
- polyether polyester polyols and mixtures thereof,
- unsaturated polyesters and mixtures thereof,
- aromatic alcohols or mixtures thereof,
- styrene,
- polyisocyanates,
- isocyanate resins,
- epoxy resins,
- phenolic resins,
- furan resins,
- caprolactam,
- dicyclopentadiene,
- aliphatic polyamines,
- polyamidoamines,
- aromatic polyamines,
- (meth)acrylates,
- polyallyl compounds,
- vinyl esters,
- polycondensation thermosetting plastics in the A state, and
- derivatives or solutions of the above-mentioned starting products.

23. Process according to any one of claims 19 to 22, wherein the microgel (B) and the starting product capable of forming the thermosetting plastics material are together subjected to treatment by means of a homogeniser, a ball mill, a bead mill, a roll mill, a three-roll mill, a single- or multi-shaft extruder screw, a kneader and/or a dissolver.

24. Process according to claim 23, wherein the microgel (B) and the starting product capable of forming the thermosetting plastics material are together subjected to treatment by means of a homogeniser.

25. Thermosetting plastics compositions obtainable by the processes according to any one of claims 19 to 24.

26. Thermosetting plastics composition obtainable by curing or crosslinking a dispersion comprising at least one starting product capable of forming a thermosetting plastics material selected from the group consisting of:

      - diallyl phthalate resins (PDAP),
      - epoxy resins (EP),
      - aminoplastics,
      - phenoplastics,
      - furfuryl alcohol-formaldehyde resins (FF),
      - unsaturated polyester resins (UP),
      - polyurethane resins (PU),
      - reaction injection moulded polyurethane resins (RIM-PU),
      - furan resins,
      - vinyl ester resins (VE, VU),
      - polyester-melamine resins, and
      - mixtures of diallyl phthalate (PDAP) or diallyl isophthalate (PDAIP) resins,

and at least one crosslinked microgel (B) whose average particle diameter of the primary particles is from 5 to 500 nm, the average particle diameter of the primary particles being determined by means of ultracentrifugation on the dispersion in accordance with DIN 53206, and which contains functional groups, wherein the functional groups are selected from the group consisting of a hydroxyl group, an epoxy group, an amine group, an isocyanate group and an unsaturated group.

27. Thermosetting plastics composition according to claim 26, wherein the mentioned dispersion is obtained by treating the dispersion by means of a homogeniser, a ball mill, a bead mill, a roll mill, a three-roll mill, a single- or multi-shaft extruder screw, a kneader and/or a dissolver.

28. Use of the thermosetting plastics compositions according to any one of claims 1 to 17, 26 and 27 or of the thermosetting plastics compositions obtainable by the processes according to any one of claims 19 to 24 as a moulded body, as a coating or as a bonding material.

29. Use of the thermosetting plastics compositions according to any one of claims 1 to 17, 26 and 27 or of the thermosetting plastics compositions obtainable by the processes according to any one of claims 19 to 24 in electronic components, in structural components.

30. Use of microgels whose average particle diameter of the primary particles is from 5 to 500 nm and which contain functional groups, wherein the functional groups are selected from the group consisting of a hydroxyl group, an epoxy group, an amine group, an isocyanate group and an unsaturated group, as a rheological additive in one or more starting products capable of forming a thermosetting plastics material (A) selected from the group consisting of:

      - diallyl phthalate resins (PDAP),
      - epoxy resins (EP),
      - aminoplastics,
      - phenoplastics,
      - furfuryl alcohol-formaldehyde resins (FF),
      - unsaturated polyester resins (UP),
      - polyurethane resins (PU),
      - reaction injection moulded polyurethane resins (RIM-PU),
      - furan resins,
      - vinyl ester resins (VE, VU),
      - polyester-melamine resins, and
      - mixtures of diallyl phthalate (PDAP) or diallyl isophthalate (PDAIP) resins,

or a solution thereof, which contain(s) reactants having a mean functionality per molecule of typically $\geq 3$.

31. Use according to claim 30, wherein the rheological additive is a thickener and/or thixotropic agent.

**32.** Compositions comprising one or more crosslinked microgels (B) whose average particle diameter of the primary particles is from 5 to 500 nm and which contain functional groups, wherein the functional groups are selected from the group consisting of a hydroxyl group, an epoxy group, an amine group, an isocyanate group and an unsaturated group, and one or more starting products capable of forming a thermosetting plastics material (A) selected from the group consisting of:

- diallyl phthalate resins (PDAP),
- epoxy resins (EP),
- aminoplastics,
- phenoplastics,
- furfuryl alcohol-formaldehyde resins (FF),
- unsaturated polyester resins (UP),
- polyurethane resins (PU),
- reaction injection moulded polyurethane resins (RIM-PU),
- furan resins,
- vinyl ester resins (VE, VU),
- polyester-melamine resins, and
- mixtures of diallyl phthalate (PDAP) or diallyl isophthalate (PDAIP) resins,

wherein the starting product or starting products consists or consist of at least 20 wt. % crosslinkable components having a mean functionality of $\geq 3$.

**Revendications**

**1.** Composition thermodurcissable contenant au moins une matière plastique thermodurcissable (A) et au moins un microgel (B) réticulé dont le diamètre moyen de particule des particules primaires va de 5 à 500 nm, **caractérisée en ce que** le microgel (B) comporte des groupes fonctionnels, ces groupes fonctionnels étant choisis dans le groupe consistent en un groupe hydroxy, époxy, amino, isocyanate et un groupe insaturé, et la matière plastique thermodurcissable (A) est choisie dans le groupe consistant en :

- les résines phtalate de diallyle (PDAP),
- les résines époxy (EP),
- les aminoplastes,
- les phénoplastes,
- les résines alcool furfurylique-formaldéhyde (FF),
- les résines polyester insaturées (UP),
- les résines polyuréthanne (PU),
- les résines polyuréthanne coulées par injection-réaction (RIM-PU),
- les résines furanne,
- les résines ester vinylique (VE, VU),
- les résines polyester-mélamine et
- les mélanges de résines phtalate de diallyle (PAP) ou isophtalate de diallyle (PDAIP).

**2.** Composition thermodurcissable contenant au moins une matière plastique thermodurcissable (A) et au moins un microgel (B) non réticulé par irradiation, à base d'homopolymères ou de copolymères statistiques, **caractérisée en ce que** le microgel (B) comporte des groupes fonctionnels, ces groupes fonctionnels étant choisis dans le groupe consistant en un groupe hydroxy, époxy, amino, isocyanate et un groupe insaturé, et la matière plastique thermodurcissable (A) est choisie dans le groupe consistant en :

- les résines phtalate de diallyle (PDAP),
- les résines époxy (EP),
- les aminoplastes,
- les résines mélamine-formaldéhyde (MF)
- les phénoplastes,
- les résines alcool furfurylique-formaldéhyde (FF),
- les résines polyester insaturées (UP),
- les résines polyuréthanne (PU),

- les résines polyuréthanne coulées par injection-réaction (RIM-PU),
- les résines furanne,
- les résines ester vinylique (VE, VU),
- les résines polyester-mélamine et
- les mélanges de résines phtalate de diallyle (PDAP) ou isophtalate de diallyle (PDAIP).

**3.** Composition thermodurcissable selon la revendication 1 ou 2, **caractérisée en ce que** la matière plastique thermodurcissable (A) est choisie dans le groupe consistant en les résines époxy, les résines aminoplastes, les phénoplastes, les résines polyester insaturées et les résines polyuréthanne moulées par injection-réaction.

**4.** Composition thermodurcissable selon l'une quelconque des revendications 1 à 3, **caractérisée en ce que** les particules primaires du microgel (B) présentent une géométrie sensiblement sphérique.

**5.** Composition thermodurcissable selon l'une quelconque des revendications 1 à 4, **caractérisée en ce que** la différence des diamètres d'une particule primaire individuelle du microgel (B), définie par

$$[(d1\text{-}d2)/d2] \times 100,$$

où d1 et d2 sont deux diamètres quelconques d'une coupe quelconque de la particule primaire avec d1 > d2, est inférieure à 250 %.

**6.** Composition thermodurcissable selon l'une quelconque des revendications 1 à 5, **caractérisée en ce que** les microgels (B) comporten,t dans du toluène à 23 °C, des fractions insolubles d'au moins 70 % en poids.

**7.** Composition thermodurcissable selon l'une quelconque des revendications 1 à 6, **caractérisée en ce que** les microgels (B) présentent, dans du toluène à 23 °C, un indice de gonflement de moins de 80.

**8.** Composition thermodurcissable selon l'une quelconque des revendications 1 à 7, **caractérisée en ce que** les microgels (B) ont des températures de transition vitreuse de -100 °C à +120 °C.

**9.** Composition thermodurcissable selon l'une quelconque des revendications 1 à 8, **caractérisée en ce que** les microgels (B) présentent une largeur du domaine de transition vitreuse de plus de 5 °C.

**10.** Composition thermodurcissable selon l'une quelconque des revendications 1 à 9, **caractérisée en ce que** les microgels (B) sont susceptible d'être obtenus par polymérisation en émulsion.

**11.** Composition thermodurcissable selon l'une quelconque des revendications 1 à 10, **caractérisée en ce qu'**elle présente un module de cisaillement de plus de 10 MPa dans une plage de température de -150 à +200 °C.

**12.** Composition thermodurcissable selon l'une quelconque des revendications 1 à 11, **caractérisée en ce que** le rapport pondéral matière plastique thermodurcissable (A)/microgel (B) va de 0,5:99,5 à 99,5:0,5.

**13.** Composition thermodurcissable selon l'une quelconque des revendications 1 à 12, **caractérisée en ce que** le rapport pondéral matière thermodurcissable (A)/microgel (B) va de 10:90 à 90:10.

**14.** Composition thermodurcissable selon l'une quelconque des revendications 1 à 13, contenant un ou plusieurs additifs pour matières plastiques.

**15.** Composition thermodurcissable selon la revendication 14, dans laquelle l'additif est choisi dans le groupe consistant en : les charges et les matières de renforcement, les pigments, les absorbeurs UV, les agents ignifuges, les antimousses, les désaérateurs, les adjuvants mouillants et dispersants, les fibres, les tissus, les catalyseurs, les épaississants, les agents anti-sédimentation, les additifs anti-retrait, les agents de thixotropie, les agents de démoulage, les agents d'étalement, les agents de matité, les inhibiteurs de corrosion, les lubrifiants, les biociles.

**16.** Composition thermodurcissable, contenant au moins une matière plastique thermodurcissable (A) qui est choisie parmi les résines polyuréthanne, et au moins un microgel (B) réticulé dont le diamètre moyen de particule des particules primaires va de 5 à 500 nm.

**17.** Composition thermodurcissable, contenant au moins une matière plastique thermodurcissable (A) qui est choisie parmi les résines polyuréthanne, et au moins un microgel (B) non réticulé par un rayonnement à haute énergie, à base d'homopolymères ou de copolymères statistiques.

**18.** Utilisation de microgels (B) réticulés ayant un diamètre moyen de particule des particules primaires de 5 à 500 nm, **caractérisée en ce que** le microgel (B) comporte des groupes fonctionnels, ces groupes fonctionnels étant choisis dans le groupe consistant en un groupe hydroxy, époxy, amino, isocyanate et un groupe insaturé, pour la préparation de compositions thermodurcissables qui contiennent au moins une matière plastique thermodurcissable (A) qui est choisie dans le groupe consistant en :

- les résines phtalate de diallyle (PDAP),
- les résines époxy (EP),
- les aminoplastes,
- les phénoplastes,
- les résines polyester insaturées (UP),
- les résines polyuréthanne (PU),
- les résines polyuréthanne coulées par injection-réaction (RIM-PU),
- les résines furanne,
- les résines ester vinylique (VE, VU),
- les résines polyester-mélamine et
- les mélanges de résines phtalate de diallyle (PDAP) ou isophtalate de diallyle (PDAIP).

**19.** Procédé pour la préparation de la composition thermodurcissable selon l'une quelconque des revendications 1 à 17, qui comprend les étapes suivantes :

a) dispersion du microgel (B), ayant un diamètre moyen de particule des particules primaires de 5 à 500 nm, dans un ou plusieurs produit(s) de départ apte(s) à la formation de la matière plastique thermodurcissable (A) ou dans une solution de celui-ci/ceux-ci, qui contiennent éventuellement des additifs pour matières plastiques, qui sont avantageusement ajoutés avant la dispersion,
b) éventuellement addition d'autres composants ; et
c) durcissement ou réticulation de la dispersion obtenue.

**20.** Procédé selon la revendication 19, dans lequel l'étape c) s'effectue avec une mise en forme simultanée.

**21.** Procédé selon la revendication 19 ou 20, dans lequel le produit de départ apte à la formation de la matière plastique thermodurcissable (A) est choisi parmi des monomères, des oligomères (prépolymères) ou des durcisseurs ou des agents de réticulation pour ceux-ci.

**22.** Procédé selon l'une quelconque des revendications 19 à 21, **caractérisé en ce que** le produit de départ apte à la formation de la matière plastique thermodurcissable (A) est choisi dans le groupe consistant en :

- les polyols et des mélanges de ceux-ci,
- les polyétherpolyols aliphatiques et des mélanges de ceux-ci,
- les polyesterpolyols aliphatiques et des mélanges de ceux-ci,
- les polyesterpolyols aromatiques et des mélanges de ceux-ci,
- les polyétherpolyesterpolyols et des mélanges de ceux-ci,
- les polyesters insaturés et des mélanges de ceux-ci,
- les alcools aromatiques ou des mélanges de ceux-ci,
- le styrène,
- les polyisocyanates,
- les résines isocyanate,
- les résines époxy,
- les résines phénoliques,
- les résines furanne,
- le caprolactame,
- le dicyclopentadiène,

- les polyamines aliphatiques,
- les polyamidoamines,
- les polyamines aromatiques,
- les (méth)acrylates,
- les composés polyallyliques,
- les esters vinyliques,
- les résines thermodurcissables de polycondensation à l'état A ainsi que
- les dérivés ou solutions des produits de départs précités.

**23.** Procédé selon l'une quelconque des revendications 19 à 22, dans lequel le microgel (B) et le produit de départ apte à la formation de la matière plastique thermodurcissable sont soumis ensemble à un traitement au moyen d'un homogénéisateur, d'un broyeur à boulets, d'un broyeur à billes, d'un broyeur à cylindres, d'un broyeur à trois cylindres, d'une vis extrudeuse à un ou plusieurs arbres, d'un malaxeur et/ou d'un dissolveur.

**24.** Procédé selon la revendication 23, dans lequel le microgel (B) et le produit de départ apte à la formation de la matière plastique thermodurcissable sont soumis ensemble à un traitement au moyen d'un homogénéisateur.

**25.** Compositions thermodurcissables susceptibles d'être obtenues conformément au procédé selon l'une quelconque des revendications 19 à 24.

**26.** Composition thermodurcissable, susceptible d'être obtenue par durcissement ou réticulation d'une dispersion contenant au moins un produit de départ apte à la formation d'une matière plastique thermodurcissable, choisi dans le groupe consistant en :

- les résines phtalate de diallyle (PDAP),
- les résines époxy (EP),
- les aminoplastes,
- les phénoplastes,
- les résines alcool furfurylique-formaldéhyde (FF),
- les résines polyester insaturé (UP),
- les résines polyuréthanne (PU),
- les résines polyuréthanne coulées par injection-réaction (RIM-PU),
- les résines furanne,
- les résines ester vinylique (VE, VU),
- les résines polyester-mélamine et
- les mélanges de résines phtalate de diallyle (PDAP) ou isophtalate de diallyle (PDAIP)

et au moins un microgel (B) réticulé dont le diamètre moyen de particule des particules primaires va de 5 à 500 nm, le diamètre moyen de particule des particules primaires étant déterminé par ultracentrifugation sur la dispersion, selon DIN 53206, et qui comporte des groupes fonctionnels, ces groupes fonctionnels étant choisis dans le groupe consistant en un groupe hydroxy, époxy, amino, isocyanate et un groupe insaturé.

**27.** Composition thermodurcissable selon la revendication 26, dans laquelle la dispersion citée est obtenue par traitement de la dispersion au moyen d'un homogénéisateur, d'un broyeur à boulets, d'un broyeur à billes, d'un broyeur à cylindres, d'un broyeur à trois cylindres, d'une vis extrudeuse à un ou plusieurs arbres, d'un malaxeur et/ou d'un dissolveur.

**28.** Utilisation des compositions thermodurcissables selon l'une quelconque des revendications 1 à 17, 26 et 27 ou des compositions thermodurcissables susceptibles d'être obtenues conformément au procédé selon l'une quelconque des revendications 19 à 24, en tant que corps moulé, revêtement ou matériau d'assemblage.

**29.** Utilisation des compositions thermodurcissables selon l'une quelconque des revendications 1 à 17, 26 et 27 ou des compositions thermodurcissables susceptibles d'être obtenues conformément au procédé selon l'une quelconque des revendications 19 à 24, dans des composants électroniques, dans des éléments de construction.

**30.** Utilisation de microgels dont le diamètre moyen de particule des particules primaires va de 5 à 500 nm et qui comportent des groupes fonctionnels, les groupes fonctionnels étant choisis dans le groupe consistant en un groupe hydroxy, époxy, amino, isocyanate et un groupe insaturé, en tant qu'additif de rhéologie dans un ou plusieurs produit(s) de départ apte(s) à la formation d'une matière plastique thermodurcissable (A) choisis dans le groupe consistant en :

- les résines phtalate de diallyle (PDAP),
- les résines époxy (EP),
- les aminoplastes,
- les phénoplastes,
- les résines alcool furfurylique-formaldéhyde (FF),
- les résines polyester insaturées (UP),
- les résines polyuréthanne (PU),
- les résines polyuréthanne coulées par injection-réaction (RIM-PU),
- les résines furanne,
- les résines ester vinylique (VE, VU),
- les résines polyester-mélamine et
- les mélanges de résines phtalate de diallyle (PDAP) ou isophtalate de diallyle (PDAIP)

ou d'une solution de celui-ci/ceux-ci, qui contient ou contiennent des partenaires réactionnels à fonctionnalité moyenne par molécule caractéristiquement égale ou supérieure à 3.

31. Utilisation selon la revendication 30, dans laquelle l'additif rhéologique est un épaississant et/ou un agent de thixotropie.

32. Compositions qui contiennent un ou plusieurs microgel(s) (B) réticulé(s) dont le diamètre moyen de particule des particules primaires va de 5 à 500 nm et qui comporte(nt) des groupes fonctionnels, ces groupes fonctionnels étant choisis dans le groupe consistant en un groupe hydroxy, époxy, amino, isocyanate et un groupe insaturé, et un ou plusieurs produit(s) de départ apte(s) à la formation d'une matière plastique thermodurcissable (A), choisi(s) dans le groupe consistant en :

- les résines phtalate de diallyle (PDAP),
- les résines époxy (EP),
- les aminoplastes,
- les phénoplastes,
- les résines alcool furfurylique-formaldéhyde (FF),
- les résines polyester insaturées (UP),
- les résines polyuréthanne (PU),
- les résines polyuréthanne coulées par injection-réaction (RIM-PU),
- les résines furanne,
- les résines ester vinylique (VE, VU),
- les résines polyester-mélamine et
- les mélanges de résines phtalate de diallyle (PDAP) ou isophtalate de diallyle (PDAIP),

dans lesquelles le produit de départ ou les produits de départ sont constitués pour au moins 20 % en poids en des composants réticulables ayant une fonctionnalité moyenne supérieure ou égale à 3.

Abb. 1. Funktionsweise des Homogenisierventils.

Differentielle und integrale Teilchengrößenverteilung - erstellt von BIS-SUA-SPA

Abb. 2. Differentielle und integrale Teilchengrößenverteilung von OBR 1236 Latex.

Abb. 3. Differentielle und integrale Teilchengrößenverteilung von OBR 1236, in Bayflex VP PU 33IF20 redispergiert.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 405216 A
- DE 4220563 A
- GB PS1078400 A
- DE 19701487
- DE 19701489
- DE 19701488
- DE 19834804
- DE 19834803
- DE 19834802
- DE 19929347
- DE 19939865
- DE 19942620
- DE 19942614
- DE 10021070
- DE 10038488
- DE 10039749
- DE 10052287
- DE 10056311
- DE 10061174
- US 4656208 A
- DE 3782589 T2
- EP 0259100 B1
- US 5089560 A
- US 5532296 A
- DE 69232851 T2
- EP 854171 A
- US 5395891 A
- US 6127488 A
- US 6184296 B
- US 19919459 B
- DE 10035493
- DE 19919459
- US 5302696 A
- US 5442009 A
- US PS2187146 A
- EP 0259100 A
- EP 0525418 A
- DE 10035493 A1
- WO 0208328 A
- US 5100945 F
- US 6399706 B

### In der Beschreibung aufgeführte Nicht-Patentliteratur

- Thermosets. Ullmann's Ecyclopedia of Industrial Chemistry. vol. A26, 665 ff
- Epoxy Resins. ULLMANNS ECYCLOPEDIA OF INDUSTRIAL CHEMISTRY. vol. 9, 547
- **W. SCHOLTAN ; H. LANGE.** Bestimmung der Teilchengrößenverteilung von Latices mit der Ultrazentrifuge. *Kolloid-Zeitschrift und Zeitschrift für Polymere,* 1972, vol. 250, 782
- **H. G. MÜLLER.** Automated determination of particle-size distributions of dispersions by analytical ultracentrifugotion. *Colloid Polym. Sci.,* 1989, vol. 267, 1113
- **H.G. MÜLLER.** Determination of very broad particle size distributions via interference optics in the analytical ultracentrifuge. *Progr. Colloid Polym. Sci.,* 2004, vol. 127, 9
- **M. MOONEY.** The viscosity of a concentrated suspension of spherical particles. *J, Colloid, Sci,* 1951, vol. 6, 162